# EUROPÄISCHE PATENTANMELDUNG

(11) **EP 4 070 658 A1**
(43) Veröffentlichungstag der Anmeldung: **12.10.2022**
(21) Anmeldenummer: 21166946.0
(22) Anmeldetag: 06.04.2021
(51) Int. Cl.: A01N 25/00, A01P 11/00

(54) **VERWENDUNG VON BLUTGERINNUNGSHEMMENDEN VERBINDUNGEN ALS RODENTIZIDE**

(71) Anmelder: BIORoxx GmbH, 45133 Essen (DE)
(72) Erfinder: GULBA, Dietrich, 45133 Essen (DE)
(74) Vertreter: Michalski Hüttermann & Partner Patentanwälte mbB

(57) **Zusammenfassung**

Die vorliegende Erfindung schlägt eine Zusammensetzung zur Bekämpfung von Schadnagetieren vor, wobei die Zusammensetzung aufweist: a) zumindest einen direkten Gerinnungsfaktorhemmer und b) zumindest einen P-Glykoprotein-Inhibitor (p-GP-Inhibitor). Durch die Zusammensetzung kann erreicht werden, dass bestehende Resistenzen bei Schadnagetieren umgangen werden können und zugleich eine gute Wirkung bei geringer Dosierung erreicht werden kann, wodurch sich eine vergleichsweise umweltfreundlichere Anwendung ergeben kann.

## Beschreibung

### TECHNISCHES GEBIET

Die vorliegende Erfindung betrifft eine Zusammensetzung zur Bekämpfung von Schadnagetieren, eine Verwendung der Zusammensetzung als Rodentizid, einen Schadnagetierköder enthaltend die Zusammensetzung und ein Verfahren zur Bekämpfung von Schadnagetieren.

### HINTERGRUND

Zusammensetzungen zur Bekämpfung von Schadnagetieren sind an sich bekannt. So stellen Wildnagetiere seit jeher ein erhebliches Problem für die Gesundheit des Menschen, für Eigentum und für die Nahrungsmittelversorgung dar. Schon zur Zeit der Pharaonen wurden Katzen gegen Nager eingesetzt. Allein von der Ratte sind fast 70 Krankheiten bekannt, von denen viele auf den Menschen übertragen werden können wie die Beulenpest, Typhus oder Morbus Weil. In der Landwirtschaft sind Wildnagetiere eine ökonomische Bedrohung. Nicht nur der Verzehr von Futter- oder Nahrungsmitteln, sondern vor allem auch Kontamination durch Kotballen und Urin führen zu wirtschaftlichem Schaden. Es wird geschätzt, dass etwa 10 % der weltweiten Nahrungsmittelversorgung allein durch Ratten verbraucht wird oder Schaden erleidet. Auch Krankheiten von Nutztieren wie Maul- und Klauenseuche oder Schweinepest werden von Wildnagetieren übertragen. Daneben kommt es auch zu weiteren Schäden an Gebäuden und Einrichtungen, da Wildnager beispielsweise auch Wasser- und Abwasserleitungen oder Kabel beschädigen können.

Das bei weitem verbreitetste Verfahren zur Bekämpfung derartiger Schadnagetiere ist der Einsatz von Fraßködern - im Einzelfall werden auch Lagerräume und/oder unterirdische Nagetiergänge begast. An geeignete Wirkstoffe für Fraßköder bestehen besondere Anforderungen. So leben Ratten in Gruppen, zeigen ausgeprägtes Sozialverhalten und ein gutes Gedächtnis. Junge Männchen stellen sich freiwillig als Vorkoster, während die übrigen Ratten für die nächsten Stunden abwarten. Stirbt der Vorkoster innerhalb von zwei Tagen, weil er von einem vergifteten Köder gefressen hat, rühren seine Artgenossen diesen nicht mehr an. Ein als Rodentizid geeigneter Wirkstoff muss somit einen entsprechend verzögerten Wirkungseintritt zeigen, sodass Artgenossen des Vorkosters nicht vom Verzehr eines entsprechenden Köders abgehalten werden. Die heute für Fraßköder verwendeten Rodentizide sind üblicherweise Antikoagulantien, da Zinkphosphid, früher typischerweise in Giftweizen verwendet, Arsenverbindungen, Bariumcarbonat, Strychnin und weißer Phosphor seit geraumer Zeit nicht mehr als Rodentizide zugelassen sind.

Bei der Blutstillung adhärieren zunächst Plättchen an Gewebestrukturen, aggregieren miteinander und bilden einen hämostatischen Pfropf. Die Aggregation der Plättchen untereinander wird über die Bindung von Fibrinogen und Ca²⁺ an Rezeptoren auf den Plättchen vermittelt. In der sekundären Phase, der Fibrinbildungsphase, verfestigt gebildetes Fibrin den hämostatischen Pfropf. Die eigentliche Blutgerinnung ist somit die Umwandlung von löslichem Fibrinogen in unlösliches Fibrin. Die Aktivierung der Blutgerinnung mündet in einen Prothrombinasekomplex aus F Xa, F Va, Phospholipid und Ca²⁺. Das Schlüsselenzym bei der Blutgerinnung ist dabei die Protease Thrombin. Thrombin katalysiert die Umwandlung von Fibrinogen zu Fibrin, indem es vom Fibrinogen die Fibrinopeptide A und B abspaltet. Die dadurch entstandenen Fibrinmonomere aggregieren zu Polymeren.

Zur Vergiftung von Nagetieren, wie der Ratte, der Maus, der Wühlmaus, des Kaninchens, des Opossums und des Erdhörnchens werden bislang unter anderem Warfarin, Coumatetralyl, Diphacinon, Flocoumafen, Brodifacoum und Bromadiolon eingesetzt. Warfarin ist (RS)-4-Hydroxy-3-(3-oxo-1-phenyl-butyl)-cumarin und Coumatetralyl ist 4-Hydroxy-3-(1,2,3,4-tetrahydro-1-naphthyl)cumarin. Difenacoum ist 3-(3-Biphenyl-4-yl-1,2,3,4-tetrahydro-1-naphthyl)-4-hydroxycumarin, Flocoumafen ist 4-Hydroxy-3-[3-(4'-trifluormethylbenzyloxyphenyl)-1,2,3,4-tetrahydro-1-naphtyl]cumarin, Brodifacoum ist 3-(3-(4'-Brom-1,1'-biphenyl-4-yl)-1,2,3,4-tetrahydro-1-naphthyl)-4-hydroxycumarin, Bromadiolon 3-[3-(4'-Brombiphenyl-4-yl)-3-hydroxy-1-phenylpropyl]-4-hydroxycumarin. Es handelt sich also um Cumarine. Cumarine, Derivate des 4-Hydroxy-Cumarins oder 1,3-Indandions, sind Vitamin K-Antagonisten, indem sie die Enzyme Vitamin-K-Chinon-Reduktase und Vitamin-K-Epoxid-Reduktase blockieren.

Vitamin K ist als Kofaktor für die posttranslationale γ-Carboxylierung von N-terminalen Glutarninsäureresten in einer Reihe von Proteinen erforderlich, wozu auch die Gerinnungsfaktoren II, VII, IX und X sowie die Gerinnungsmodulatoren Protein C und Protein S zählen. Cumarine wie z.B. Phenprocoumon (Marcumar^{®}, Falithrom^{®}) oder Warfarin (Couxnadin^{®}) sind somit indirekt wirkende Antikoagulantien. Entsprechend den unterschiedlichen biologischen Halbwertszeiten Vitamin-K-abhängiger Gerinnungsfaktoren wird der maximale Cumarineffekt erst mit erheblicher Verzögerung manifest, im Menschen nach 24 bis 36 Stunden.

Zwei weitere bekannte Rodentizide sind Difenacoum (2-(Diphenylacetyl)-1H-indene-1,3(2H)-dion) Pindon (2-Pivaloyl-1,3-indandion). Als Indandion-Verbindungen wirken sie wie ein Cumarin als Vitamin K-Antagonisten.

Die Wirksamkeit von Cumarinen und Indandion-Verbindungen beruht auf der langsamen Akkumulation der Substanz im Tierkörper und der in der Folge zunehmenden Gerinnungshemmung weshalb die Tiere langsam innerlich verbluten. Gerade die nur progressiv einsetzende Giftwirkung machte die Cumarine und Indandion-Verbindungen als Schadnagergifte so besonders erfolgreich.

Bei der Aufnahme eines mit einem Cumarin oder einer Indandion-Verbindung versetzten Köders bleiben die Ratten zunächst am Leben und zeigen keinerlei Vergiftungssymptome. Ein Wildnager wie eine Ratte, die sich regelmäßig von der Ködernahrung ernährt, stirbt somit nicht unmittelbar oder in kurzem Abstand nach Köderverzehr sondern bleiben noch einige Tage am Leben bevor sie schließlich innerlich verblutetet. Dies gilt somit auch für eine "Vorkosterratte". Das protektive Sozialverhalten der Ratte wird damit wirksam umgangen und der Pestizid (Cumarin/Indandion) haltige Nahrungsköder wird vom Rattenvolk nicht gemieden. Vielmehr ernährt sich das ganze Rattenvolk von dem leicht zu habenden Köder was in einer zwar zeitlich versetzten aber vollständigen Auslöschung der gesamten Rattenpopulation führt. Regelmäßig angebotene Köder, die eine Cumarin- oder Indandion-Verbindung aufweisen, haben so zuverlässig zur sicheren Elimination großer Rattenpopulationen geführt.

Mittlerweile ist durch den verbreiteten Einsatz von Cumarin- und Indandion-Verbindungen bei nahezu einem Drittel bis die Hälfte der weltweiten Rattenstämme mit einer ausgeprägten Resistenz gegen Cumarin- und Indandion-Verbindung zu rechnen. Diese Resistenz beruht auf einem ebenfalls vorhandenen alternativen Thiol- (SH-)/Disulfid(S-S) abhängigen Reduktionsweg des Vitamin K. Anders als beim Menschen, bei dem der Thiolabhängige Reduktionsweg i.d.R. nur sehr ungenügend ausgebildet ist, existiert heute eine Vielzahl von Rattenstämmen, die diesen alternativen Reduktionsweg des Vitamin K aktivieren können. Beim dauerhaften Einsatz der Cumarine als Pestizide stellte der Thiolabhängige Reduktionsweg für die Ratte einen signifikanten Selektionsvorteil dar. Über die vielen Jahrzehnte, in denen Cumarin-Köder sehr effizient verwendet wurden haben sich insbesondere die Cumarin-resistenten Stämme ungestört vermehren können, sodass mittlerweile eine deutliche Selektion dieser cumarinresistenten Rattenstämme entstanden ist.

Ein erhebliches Problem derartiger Antikoagulantien ist deshalb mittlerweile, neben Persistenz und/oder Bioakkumulation, eine verbreitete Resistenz bei Wildnagetieren. Eine Resistenz gegen ein Antikoagulans wurde bereits in den 50er Jahren gefunden. Nachdem zunächst nur die Antikoagulantien der ersten Generation wie Warfarin und Coumatetralyl betroffen waren, wurden später auch Resistenzen gegen die wirksameren Antikoagulantien der zweiten Generation wie Difenacoum oder Bromadiolon beobachtet. Mittlerweile sind mehr als 40% aller Rattenstämme gegen diese Antikoagulantien resistent.

Seit dem 1. Januar 2013 wäre ein Vertrieb herkömmlicher Rodentizide in der Europäischen Union zudem eigentlich auf Grund des Überschreitens der als für Organismen unbedenklich vorhergesagten Konzentration in der Umwelt nicht mehr zulässig. Mangels Alternativen besteht jedoch weiterhin eine befristete Zulassung zur Anwendung durch sachkundige Personen.

Es besteht somit Bedarf an einem effektiven Weg zur Bekämpfung von Wildnagetieren.

### AUFGABE

Es ist daher die Aufgabe der vorliegenden Erfindung, eine Zusammensetzung zur Bekämpfung von Schadnagetieren bereitzustellen, die die Nachteile bekannter Zusammensetzungen überwindet. Insbesondere ist es die Aufgabe der vorliegenden Erfindung Zusammensetzungen zur Bekämpfung von Schadnagetieren bereitzustellen, die Resistenzen gegen bekannte Vitamin K-Antagonisten umgehen, eine hohe Wirksamkeit aufweisen und eine vergleichsweise geringe Umweltbelastung darstellen.

Gelöst wird diese Aufgabe durch die Zusammensetzung gemäß Anspruch 1 sowie ferner durch die Verwendung nach Anspruch 12, den Schadnagetierköder nach Anspruch 13 und das Verfahren nach Anspruch 14. Bevorzugte Ausgestaltungen der Erfindung sind in den Unteransprüchen und in der Beschreibung angegeben, wobei weitere in den Unteransprüchen oder in der Beschreibung gezeigte Merkmale einzeln oder in einer beliebigen Kombination einen Gegenstand der Erfindung darstellen können, wenn sich aus dem Kontext nicht eindeutig das Gegenteil ergibt.

### DEFINITIONEN

Soweit nicht anders angegeben, haben die folgenden Begriffe und Ausdrücke, wenn sie in diesem Dokument, inklusive Beschreibung und Patentansprüchen, verwendet werden, die im Folgenden angegebenen Bedeutungen.

Der Begriff "aliphatisch" wie in diesem Dokument verwendet, kann je nach Kontext, sowohl eine chemische Gruppe als auch eine chemische Verbindung als Ganzes betreffen. Der Begriff bedeutet, falls nicht anders angegeben, das Vorliegen einer geradkettigen oder verzweigten Kohlenwasserstoffkette, die gesättigt oder mono- oder polyungesättigt sein kann und ein oder mehrere Heteroatome enthalten kann. Heteroatome sind von Kohlenstoff verschieden Atome wie N, O, S, Se oder Si. Eine ungesättigte aliphatische Gruppe enthält eine oder mehrere Doppel- und/oder Dreifachbindungen, d.h. Alken- und/oder Alkingruppen. Die Verzweigungen der Kohlenwasserstoffkette können lineare Ketten sowie auch nicht-aromatische cyclische Elemente aufweisen. Falls nicht anders angegeben, kann die Kohlenwasserstoffkette von jeder gewünschter Länge sein und jede gewünschte Anzahl an Verzweigungen enthalten. In typischen Ausführungs-formen enthält die Kohlenwasserstoffhauptkette bis zu etwa 20 Kohlenstoffatome, beispielsweise 1 bis etwa 15 Kohlenstoffatome. In einigen Ausführungsformen enthält die Kohlenwasserstoffhaupt-kette 2 bis etwa 10 Kohlenstoffatome. Beispiele für Alkylgruppen sind Methyl-, Ethyl-, Propyl-, Butyl-, Pentyl-, Hexyl-, Heptyl-, Octyl- (Capryl-), Nonyl- (Pelargonyl-), Decyl- (Caprin-), Dodecyl- (Lauryl-), Tetradecyl- (Myristyl-), Hexadecyl- (Cetyl-), die n-Isomere dieser Gruppen, Isopropyl, Isobutyl, Isopentyl, sec-Butyl, tert-Butyl, Neopentyl oder 3,3 Dimethylbutyl.

Der Begriff "cycloaliphatisch", gleichbedeutend mit alicyclisch, betrifft soweit nicht anders angegeben eine nicht-aromatische cyclische chemische Struktur, typischerweise einen cyclischen Kohlenwasserstoffrest. Eine solche Ringstruktur kann gesättigt sein. Eine solche Ringstruktur kann eine oder mehrere Doppelbindungen enthalten. Diese cyclische Struktur kann mehrere geschlossene Ringe enthalten, die wie beispielsweise im Decalin fusioniert sein können. Eine cycloaliphatische Gruppe sowie ein cycloaliphatisches Molekül kann mit einem oder mehreren nicht-aromatischen Ringen, Kettenelementen oder funktionellen Gruppen substituiert sein. Ist eine cycloaliphatische Struktur mit einem Aromaten substituiert, so wird diese Gruppe oder dieses Molekül auch als arylalicyclisch bezeichnet. Falls nicht anders angegeben kann die Hauptkette einer cycloalipha-tischen Kohlenwasserstoffeinheit in einem Ring beliebig viele nicht-aromatische cyclische oder Kettenelemente aufweisen. Eine Hauptkette einer cycloaliphatischen Kohlenwasserstoffeinheit kann in einigen Ausführungsformen 3, 4, 5, 6, 7 oder Hauptkettenatome in einem Ring enthalten. Illustrative Beispiele solcher Einheiten sind Cylcopentyl, Cyclohexyl, Cycloheptyl, oder Cyclooctyl. Eine cycloaliphatische Kohlenwasserstoffeinheit kann darüber hinaus Heteroatome aufweisen, sowohl innerhalb der Hauptkette als auch in Substituenten wie einer Seitenkette oder einem cyclischen Substituenten. Beispiele für solche Heteroatome sind N, O, S, Se oder Si.

Der Begriff "aromatisch" wie in diesem Dokument verwendet betrifft eine planare cyclische Kohlenwasserstoffeinheit, sowohl als vollständiges Molekül als auch als chemische Gruppe bzw. als Rest. Eine aromatische Kohlenwasserstoffeinheit zeichnet sich durch konjugierte Doppelbindungen aus. Eine aromatische Einheit kann einen einzigen Ring aufweisen oder eine Mehrzahl an fusionierten oder kovalent verbundenen Ringen. Illustrative Beispiele entsprechender Einheiten sind Cylcopentadienyl, Phenyl, Napthalenyl-, [10]Annulenyl-(1,3,5,7,9-Cyclodecapentaenyl-), [12]Annulenyl-, [8]Annulenyl-, Phenalen (Perinaphthen), 1,9-Dihydropyren oder Chrysen (1,2-Benzophenanthren). Ein einzelner aromatischer Ring weist typischerweise 5, 6, 7 oder 8 Hauptkettenatome auf. Eine aromatische Einheit kann Substituenten wie funktionelle Gruppen oder aliphatische Gruppen enthalten. Der Begriff "aromatisch" umfasst auch "Arylalkyl" wie beispiels-weise eine Benzyleinheit. Eine aromatische Kohlenwasserstoffeinheit kann darüber hinaus Hetero-atome aufweisen, sowohl innerhalb der Hauptkette als auch in Substituenten wie beispielsweise einer Seitenkette. Beispiele für solche Heteroatome sind N, O, S oder Se. Zu Beispielen heteroaromatischer Kohlenwasserstoffeinheiten zählen Furanyl-, Thiophenyl-, Naphtyl-, Naphthofuranyl-, Anthrathiophenyl-, Pyridinyl-, Pyrrolyl-, Quinolinyl, Naphthoquinolinyl-, Quinoxalinyl-, Indolyl-, Benzindolyl-, Imidazolyl-, Oxazolyl-, Oxoninyl-, Oxepinyl-, Benzoxepinyl-, Azepinyl-, Thiepinyl-, Selenepinyl-, Thioninyl-, Azecinyl-(Azacyclodecapentaenyl-), Diazecinyl-, Azacyclododeca-1,3,5,7,9,11-Hexaen-5,9-diyl-, Azozinyl-, Diazocinyl-, Benzazocinyl-, Azecinyl-, Azaundecinyl-, Thia[11]Annulenyl-, Oxacyclotrideca-2,4,6,8,10,12-Hexaenyl- oder Triazaanthracenyl-Einheiten.

Der Begriff "arylaliphatisch" bezieht sich auf Kohlenwasserstoffeinheiten, die eine oder mehrere aromatische Einheiten und eine oder mehrere aliphatische Einheiten enthalten, wobei eine oder mehr aromatische Einheiten an eine oder mehr aliphatische Einheiten gebunden sind. In einigen Ausführungsformen enthält eine Kohlenwasserstoffhauptkette in einem aromatischen Ring einer arylaliphatischen Einheit 5, 6, 7 oder 8 Hauptkettenatome. Zu Beispielen arylaliphatischer Einheiten zählen 1-Ethyl-naphthalin, 1,1'-Methylenebis-benzol, 9-Isopropylanthracen, 1,2,3-Trimethyl-benzol, 4-Phenyl-2-buten-1-ol, 7-Chloro-3-(1-methylethyl)-chinolin, 3-Heptyl-furan, 6-[2-(2,5-Diethylphenyl)ethyl]-4-ethyl-Chinazolin oder 7,8-Dibutyl-5,6-diethyl-isochinolin.

Die Begriffe "Bekämpfen" und "Bekämpfung" wie in diesem Dokument verwendet, betreffen eine Maßnahme, mit der erreicht wird, dass ein unerwünschter Organismus, im vorliegenden Fall ein Schadnagetier, abgetötet wird. "Bekämpfung" hat in einigen Ausführungsformen eine dem Begriff "Kontrolle" entsprechende Bedeutung. "Bekämpfen" und "Bekämpfung" bezeichnen beispielsweise das Hervorrufen, das Beschleunigen, das Fördern, inklusive das Ermöglichen des Auftretens eines unnormalen, inklusive eines pathologischen, Zustands in einem Organismus eines Schadnagetiers. Typischerweise zählt zum "Bekämpfen" ein Verfahren und/oder eine Verwendung, bei dem/der eine Verbindung Zellen oder Gewebe eines Schadnagetiers verabreicht wird. Die Begriffe "Bekämpfen" und "Bekämpfung" beinhalten daneben in der Regel auch Elemente des Verfahrens und/oder der Verwendung, die es ermöglichen, dass eine entsprechende Verbindung Zellen oder Gewebe eines Schadnagetiers verabreicht werden kann. In den hier offen-barten Verfahren und Verwendungen beruhen solche Elemente, die ein Verabreichen ermöglichen, typischerweise auf dem zeitlichen Rahmen des Wirkungseintritts des in einem solchen Verfahren und/oder einer solchen Verwendung eingesetzten Wirkstoffes.

Der Ausdruck "bestehend aus" wie in diesem Dokument verwendet, bedeutet einschließend und begrenzt auf das, was dem Begriff "bestehend aus" folgt. Der Begriff "bestehend aus", gibt somit an, dass aufgeführte Elemente erforderlich oder notwendig sind und dass keine weiteren Elemente vorhanden sein dürfen. Der Begriff "im Wesentlichen bestehend aus" wird dahingehend verstanden, dass er bedeutet, dass jedwede Elemente, die nach dem Ausdruck definiert sind, umfasst sind und dass weitere Elemente, beispielsweise in einer Probe oder einer Zusammensetzung zugegen sein können, die die Aktivität oder Wirkung, die für die betreffenden Elemente in diesem Dokument angegeben sind, nicht verändern, also sie nicht beeinträchtigen und nicht zu ihr beitragen. Als Beispiel bedeutet der Begriff für eine pharmazeutische Zusammensetzung, dass diese Trägerstoffe/Hilfsmittel enthalten kann, wenn sie im Wesentlichen aus einem oder mehreren Wirkstoffen besteht. Somit gibt der Ausdruck "im Wesentlichen bestehend aus" an, dass die definierten Elemente notwendig oder erforderlich sind, dass aber weitere Elemente optional sind und zugegen sein können oder nicht, je nachdem, ob sie für die Wirkung oder Wirksamkeit der definierten Elemente von Belang sind oder nicht.

Das Wort "etwa" bezieht sich wenn hier verwendet auf einen Wert, der für einen bestimmten Wert, wie von einem Durchschnittsfachmann bestimmt, innerhalb eines akzeptablen Fehlerbereichs liegt. Dies wird teilweise davon abhängig sein, wie der jeweilige Wert ermittelt oder gemessen worden ist, d.h. von den Einschränkungen des Messsystems. "Etwa" kann beispielsweise innerhalb einer Standardabweichung von 1 oder mehr bedeuten, je nach Gebrauch im jeweiligen Gebiet. Der Begriff "etwa" wird auch verwendet um anzugeben, dass der Betrag oder Wert der bezeichnete Wert sein kann oder ein anderer Wert, der näherungsweise gleich ist. Der Begriff soll ausdrücken, dass ähnliche Werte gleichwertige Ergebnisse oder Wirkungen, wie in diesem Dokument offenbart, begünstigen. In diesem Zusammenhang kann "etwa" sich auf einen Bereich von bis zu 10 % über und/oder unter einem bestimmten Wert beziehen. In einigen Ausführungsformen bezieht "etwa" sich auf einen Bereich von bis zu 5 % über und/oder unter einem bestimmten Wert, wie etwa 2 % über und/oder unter einem bestimmten Wert. In einigen Ausführungsformen bezieht "etwa" sich auf einen Bereich von bis zu 1 % über und/oder unter einem bestimmten Wert. In einigen Ausführungsformen bezieht "etwa" sich auf einen Bereich von bis zu 0,5 % über und/oder unter einem bestimmten Wert. In einer Ausführungsform bezieht sich "etwa" auf einen Bereich von bis zu 0,1 % über und/oder unter einem bestimmten Wert.

Der Konjunktionalausdruck "und/oder" zwischen mehreren Elementen, wenn hier verwendet, wird als sowohl individuelle als auch kombinierte Optionen umfassend verstanden. Sind beispielsweise zwei Elemente durch "und/oder" verknüpft, betrifft eine erste Option den Einsatz des ersten Elements ohne das zweite. Eine zweite Option betrifft den Einsatz des zweiten Elements ohne das erste. Eine dritte Option betrifft den Einsatz des ersten und des zweiten Elements zusammen. Es wird verstanden, dass jede beliebige dieser Optionen unter die Bedeutung des Ausdrucks fällt und somit die Bedingungen des Begriffs "und/oder", wie in diesem Dokument verwendet, erfüllt.

Der Begriff "niedermolekular" im Zusammenhang mit einer Verbindung, beispielsweise als ein niedermolekularer Thrombininhibitor, bezieht sich auf eine molekulare Masse, die im Bereich bis etwa 5000 Da liegt. In einigen ausführungsformen kann die Masse einer niedermolekularen Verbindung im Bereich bis etwa 2000 Da liegen.

Der Begriff "Prodrug" bezeichent eine Verbindung, die im Organismus eines Tieres wie z.B. eines Nagetieres - beispielsweise auf enzymatischem, mechanischem und/oder elektromagnetischem Weg - in seine aktive Form überführt wird, die die gewünschte pharmakologische oder toxikologische Wirkung zeigt. Ein "Prodrug" ist demgemäß ein Derivat des aktiven Wirkstoffs, das selbst noch pharmakologisch/toxikologisch inaktiv ist oder im Vergleich zum endgültigen aktiven Wirkstoff eine geringere Wirkung zeigt. Prodrugs werden typischerweise eingesetzt, um Heraus-forderungen hinsichtlich Stabilität, Spezifität, Toxizität oder Bioverfügbarkeit zu bewältigen. Ein Prodrug kann beispielsweise im Vergleich zum endgültigen aktiven Wirkstoff eine vorteilhafte Löslichkeit, Gewebekompatibilität oder Freisetzung aufweisen. Beispielsweise kann ein Prodrug im Vergleich zum endgültigen aktiven Wirkstoff eine Schutzgruppe an einer funktionellen Gruppe tragen, die in vivo durch Solvolyse oder enzymatisch entfernt wird. Als weiteres Beispiel kann ein Prodrug in vivo über eine Oxidation und/oder über eine Phosphorylierung oder Glykosylierung in einen endgültigen aktiven Wirkstoff überführt werden. Dabei können ein oder mehrere Enzyme und/oder Magensäure beteiligt sein. Zu Beispielen typischer Prodrugs zählen Carbonsäurederivate wie ein Ester, der durch Reaktion einer Stamm-Säureverbindung mit einem geeigneten Alkohol, z.B. ein C₁₋₆-Alkohol erhalten wird, ein Amid, das durch Reaktion einer Stamm-Säureverbindung mit einem geeigneten Amin, z.B. ein C₁₋₆-Amin erhalten wird oder eine acylierte basische Gruppe wie z.B. ein C₁₋₆-Acylamin, die durch Reaktion einer base-nhaltigen Stammverbindung mit einer Carbonsäureverbindung erhalten wird.

Der Begriff "Verabreichen" bezieht sich wenn hier verwendet auf jedwede Art des Transferierens, Zuführens, Einführens oder Transportierens von Material wie einer Verbindung, z.B. einer pharmazeutischen Verbindung, oder eines anderen Reagenzes wie eines Antigens in/zu einem Subjekt. Zu Verabreichungsformen zählen beispielsweise orale Verabreichung, topischer (örtlicher) Kontakt, intravenöse, intraperitoneale, intramuskuläre, intranasale und subkutane Verabreichung. In den hier beschriebenen Anwendungen und Verfahren erfolgt die Verabreichung an Nagetiere typischerweise oral. Verabreichung "in Kombination mit" einem oder mehreren weiteren Stoffen wie z.B. einem oder mehreren pharmazeutischen Wirkstoffen umfasst simultane, also gleichzeitige, und aufeinander folgende Verabreichung in jeder Reihenfolge. Beim Ausbringen eines Köders als Verabreichen wird insofern dem Sozialverhalten von Nagetieren Rechnung getragen, als den Nagetieren für die Aufnahme Zeitpunkt und Reihenfolge innerhalb der Gruppe überlassen bleiben.

Singularformen wie "eine", "ein", "der", "die" oder "das" schließen die Pluralform ein, wenn sie in diesem Dokument verwendet werden. So bezeichnet beispielsweise eine Bezugnahme auf "eine Zelle" sowohl eine individuelle Zelle als auch eine Mehrzahl an Zellen. In einigen Fällen wird explizit der Ausdruck "ein oder mehrere" verwendet, um im jeweiligen Fall darauf hinzuweisen, dass die Singularform die Pluralform mit umfasst. Derartige explizite Hinweise schränken die allgemeine Bedeutung der Singularform nicht ein. Falls nicht anders angegeben, werden die Begriffe "zumindest", "mindestens" und "wenigstens", wenn sie eine Abfolge von Elementen vorangehen, dahingehend verstanden, dass sie sich auf jedes dieser Elemente beziehen. Die Begriffe "zumindest ein", "mindestens ein(e)", "wenigstens einer" oder "wenigstens eine(r) von" schließen beispielsweise ein, zwei, drei, vier oder mehr Elemente ein.

Der Ausdruck "zumindest im Wesentlichen bestehend aus" wird, wenn hier verwendet, als die Begriffe "im Wesentlichen bestehend aus" und "bestehend aus" umfassend verstanden. Der Begriff "zumindest im Wesentlichen bestehend aus", gibt somit an, dass in einigen Ausführungs-formen aufgeführte Elemente erforderlich oder notwendig sind und dass keine weiteren Elemente vorhanden sein dürfen. Der Begriff "zumindest im Wesentlichen bestehend aus", gibt somit auch an, dass in einigen Ausführungsformen aufgeführte Elemente erforderlich oder notwendig sind, dass aber weitere Elemente optional sind und zugegen sein können oder nicht, je nachdem, ob sie für die Wirkung oder Wirksamkeit der definierten Elemente von Belang sind oder nicht. Es wird weiterhin verstanden, dass geringe Abweichungen über oder unter einen hier angegebenen Bereich eingesetzt werden können, um ein im Wesentlichen gleiches Ergebnis zu erzielen wie ein Wert, der innerhalb des Bereichs liegt. Falls nicht anders angegeben, ist die Offenbarung eines Bereichs auch als kontinuierlicher Bereich vorgesehen, inklusive aller Einzelwerte, die zwischen dem Minimal-und dem Maximalwert liegen.

Die im Sinne der vorliegenden Erfindung beschriebenen Formeln sind so zu verstehen, dass auch vorgesehen sein kann, dass die beschriebenen Substanzen als Prodrug, Salz oder Hydrat in der Zusammensetzung vorliegen können.

### BESCHREIBUNG DER ERFINDUNG

Mit der Erfindung wird eine Zusammensetzung zur Bekämpfung von Schadnagetieren vorgeschlagen, aufweisend:
a) zumindest einen direkten Gerinnungsfaktorhemmer und
b) zumindest einen P-Glykoprotein-Inhibitor (p-GP-Inhibitor).

Unter einem Gerinnungsfaktorhemmer wird im Sinne der vorliegenden Erfindung eine Substanz verstanden, die einen der Blutgerinnungsfaktoren hemmen kann. Blutgerinnungsfaktoren sind dabei im Sinne der vorliegenden Erfindung Substanzen die an einer funktionierenden Blutgerinnung beteiligt sind. Unter Hemmen ist im Sinne der vorliegenden Erfindung das Einschränken der Funktion der entsprechenden Substanz zu verstehen, wobei der Begriff unabhängig vom Wirkmechanismus des Hemmers verwendet wird. Ein Hemmer kann im Sinne der vorliegenden Erfindung also beispielsweise ein Inhibitor sein oder aber auch ein Antagonist. Direkte Gerinnungsfaktorhemmer sind dabei im Sinne der vorliegenden Erfindung Gerinnungsfaktorhemmer, die die Gerinnungsfaktoren direkt hemmen und nicht, im Vergleich zu indirekten Gerinnungsfaktorhemmern wie Vitamin K-Antagonisten, Kofaktoren benötigen oder beispielsweise nur die Synthese der Gerinnungsfaktoren hemmen.

Unter einem P-Glykoprotein-Inhibitor wird im Sinne der vorliegenden Erfindung eine Substanz verstanden die die Funktion des P-Glykoproteins einschränkt. Unter dem Begriff P-Glykoprotein wird dabei in bekannter Weise ein spezifisches Membranprotein verstanden, das ein primär aktiver Effluxtransproter ist, der seine Substrate aus der Zellmembran in den extrazellulären Raum transportieren kann. P-Glykoprotein-Inhibitoren werden auch als multi-Drug-Resistance-Protein (MDR-P) oder MDR1, Breast Cancer Resistance Protein (BCRP), oder ATP-Binding Cassette (ABC)-Superfamily bezeichnet.

Es konnte gezeigt werden, dass durch die vorbeschriebene Zusammensetzung Schadnagetiere getötet werden können. Insbesondere konnte gezeigt werden, dass durch die Kombination von zumindest einem Gerinnungsfaktorhemmer in einer Dosierung, die bei Ratten in akuter oder chronischer Verabreichung absolut keine Blutungen hervorzurufen, mit zumindest einem P-Glykoprotein-Inhibitor, der selbst ohne jegliche hämorrhagische Eigenwirkung ist, die Wirkung des o.g. Gerinnungsfaktorhemmers derart verstärkt werden kann, dass auch bei einer vergleichsweise geringen Aufnahme der Zusammensetzung durch ein Schadnagetier, die Gerinnungskaskade derart gehemmt werden kann, dass sich nach einer Latenzzeit durch spontane Blutungen der Tod des Schadnagetiers einstellen kann.

Vorteilhafterweise konnte gezeigt werden, dass die Wirksamkeit der erfindungsgemäßen Zusammensetzung insbesondere auch bei Rattenstämmen wirksam ist, die möglicherweise eine Resistenz gegen Vitamin K-Antagonisten aufweisen.

Ohne an eine Theorie gebunden zu sein, konnte gezeigt werden, dass die direkten Gerinnungsfaktorhemmer alle einem Ceiling-Effekt unterliegen, weshalb auch bei exzessiver Dosierung bei oraler Aufnahme nur limitierte Konzentrationen im Blut erreicht werden können, die für die Verursachung spontaner Blutungen nicht ausreichend sind. Durch die Kombination mit zumindest einen p-GP-Inhibitor kann erreicht werden, dass dieser Ceiling-Effekt aufgehoben wird. Zudem kann durch den p-GP-Inhibitor erreicht werden, dass die verwendeten direkten Gerinnungsfaktorhemmer auch die Blut-Hirnschranke überwindenund somit auch im Gehirn wirksam werden können. Dadurch kann erreicht werden, dass auch spontane Gehirnblutungen verzögert verursacht werden können, wodurch ein besonders rascher Tod des Schadnagetiers erreicht werden kann, ohne dass vorher Vergiftungserscheinungen auftreten. Vergiftungssymptome oder der Tod einer Ratte kurz nachdem eine Ratte einen Köder gefressen hat können bewirken, dass ein Rattenstamm diesen Köder vollständig vermeidet und so der Ausrottung entgeht. Ferner sind einige p-GP-Inhibitoren auch Hemmer der verschiedenen Cytochromoxidasen. Die Cytochromoxydasen sind verantwortlich für den Abbau verschiedener Medikamente in der Leber. Bei Blockade der Cytrochrom P450 (CYP) Monooxigenase verlängert sich der Abbau und damit die Halbwertszeit der abhängigen Medikamente. Dadurch kann zusätzlich erreicht werden, dass bei Mehrfachingestion der Zusammensetzung die Bestandteile der Zusammensetzung schneller akkumulieren und somit eine letale Dosis auch bei geringer wiederholter Ingestion erreicht werden kann. Bei Auswahl eines p-GP-Inhibitors mit CYP-Inhibition wird demnach zusätzlich der Abbau der Substanz(en) gehemmt wodurch der Spiegel weiter steigt.

Dadurch, dass die Zusammensetzung den zumindest einen direkten Gerinnungsfaktorhemmer und den zumindest einen p-GP-Inhibitor aufweist kann somit erreicht werden, dass eine gute Rodentizid-Wirkung bei niedriger Dosierung des Gerinnungsfaktorenhemmers erreicht werden kann.

Durch die vorbeschriebene Zusammensetzung kann ferner eine bessere Umweltverträglichkeit erreicht werden. Diese kann vorteilhafterweise dadurch erreicht werden, dass die Wirksamkeit der Zusammensetzung auf der Kombination der direkten Gerinnungsfaktorhemmer mit dem zumindest einen p-GP-Inhibitor beruht. Die Konzentration des direkten Gerinnungsfaktorhemmers kann deshalb so gering gehalten werden, dass eine letale Wirkung überhaupt erst durch Kombination mit dem p-GP-Inhibitor erreicht werden kann. Da die mindestens zwei Substanzen jeweils sehr unterschiedlich metabolisiert und auch unterschiedlich ausgeschieden werden verändert sich die Komposition der gemeinsam verabreichten Wirksubstanzen dadurch, dass die Konzentration jeder der Einzelsubstanzen sich so verändert, dass die toxische Wirkung rasch verloren wird und auch die Ausscheidungen eines solchen Tieres keine toxische Zusammensetzung mehr aufweisen. Dadurch, dass die Zusammensetzung so wirksam ist, kann die Dosis der Zusammensetzung zudem so gewählt werden, dass sie erst nach Mehrfachingestion einsetzt. Somit kann die Wirkung bei Tieren, die einen entsprechenden Köder versehentlich aufnehmen reduziert werden. Ferner werden die verwendeten Substanzen im Zieltier unterschiedlich metabolisiert, so dass sich die Toxizität für Raubtiere und Aasfresser schnell verliert und auch die Ausscheidungen der Zieltiere nicht mehr eine wirksame Kombination der Zusammensetzungsbestandeile aufweisen. Dadurch kann die Zusammensetzung eine sicherere Handhabbarkeit aufweisen und wegen einer insgesamt geringeren Dosis die Umwelt schonen. Insbesondere wird die Giftwirkung für Raubtiere der vergifteten Schadnagetiere durch den Metabolismus des Schadnagetiers bereits abgeschwächt, weil das Schadnagetier nach Ingestion noch weiter lebt. Somit haben auch Kadaver vergifteter Schadnagetiere für Aasfresser eine abgeschwächte Giftwirkung. Restgift kann darüber hinaus auch von den Raubtieren oder Aasfressern rasch weiter abgebaut werden, was die Toxizität für diese rasch weiter vermindert. Ferner kann eine letale Wirkung für Raubtiere und Aasfresser auch nur dann auftreten, wenn diese gleichzeitig mehrere vergiftete Tiere und diese mehrfach hintereinander an aufeinander folgenden Tagen fressen. Dadurch wird insbesondere die Kreuztoxizität für andere Tiere reduziert.

Im Ergebnis kann somit durch die erfindungsgemäße Zusammensetzung erreicht werden, dass Schadnagetiere wirksam bekämpft werden können und zugleich eine vergleichsweise geringere Kreuztoxizität mit anderen Tieren und eine vergleichsweise sehr geringe Umweltbelastung gewährleistet werden kann.

Bevorzugt kann vorgesehen sein, dass der Gerinnungsfaktorhemmer ausgewählt ist aus der Gruppe bestehend aus Faktor Xa-Hemmern und Faktor IIa-Hemmern.

Dadurch kann erreicht werden, dass die Zusammensetzung besonders effizient ist. Ohne an eine Theorie gebunden zu sein wird davon ausgegangen, dass Faktor Xa-Hemmer und Faktor IIa-Hemmer besonders effizient sind, weil sich ihre Wirksamkeit besonders vorteilhaft durch den p-GP-Inhibitor beeinflussen lässt und weil sie beide jeweils die Endstrecken von sowohl der intrinsischen als auch der extrinsischen Gerinnungskaskade hemmen.

### Faktor Xa-Hemmer:

Bevorzugt kann vorgesehen sein, dass die Zusammensetzung als Gerinnungsfaktorhemmer zumindest einen Faktor Xa-Hemmer aufweist, wobei der zumindest eine Faktor Xa-Hemmer vorzugsweise ausgewählt ist aus der Gruppe bestehend aus den nachfolgend aufgelisteten Faktor Xa-Hemmern i)-ix).

Es konnte gezeigt werden, dass sich diese Faktor Xa-Hemmer besonders gut für die Zusammensetzung eignen, da diese sich besonders vorteilhaft durch den p-GP-Inhibitor beeinflussen lassen und sich gut für eine orale Aufnahme eignen.

In einer bevorzugten Ausgestaltung kann vorgesehen sein, dass der Faktor Xa-Hemmer ausgewählt ist aus
i) einer Verbindung der folgenden Formel: 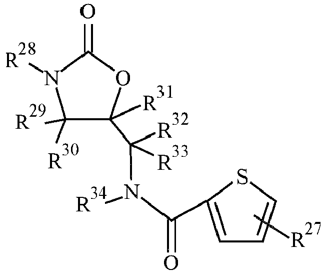 wobei R²⁷ Halogen, Cyano, Nitro, Amino, Aminomethyl, C₁₋₈-Alkyl, C₃₋₇-Cycloalkyl, C₁₋₈-Alkoxy, Imidazolinyl, -C(=NH)NH₂, Carbamoyl oder Mono- und Di-(C₁₋₄)-alkyl-aminocarbonyl ist und
   R²⁸, R²⁹, R³⁰, R³¹, R³², R³³ und R³⁴ unabhängig voneinander H oder C₁₋₆-Alkyl sind.

Beispielsweise kann der vorbeschriebene Faktor Xa-Hemmer bevorzugt Rivaroxaban (Xarelto^{®}) sein, wie beispielsweise auch in der WO 01/47919 beschrieben.

In einer alternativen bevorzugten Ausgestaltung kann vorgesehen sein, dass der Faktor Xa-Hemmer ausgewählt ist aus
ii) einer Verbindung der folgenden Formel: 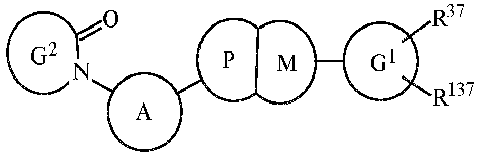 wobei A ein C₃-C₁₀-Carbocyclus oder ein 5-12-gliedriger Heterocyclus aus Kohlenstoffatomen und 1-4 Heteroatomen N, O oder S ist,
P ein 5-7-gliedriger Carbocyclus oder ein 5-7-gliedriger Heterocyclus aus Kohlenstoffatomen und 1-3 Heteroatomen N, O oder S ist und 0-3 Doppelbindungen im Zyklus enthält,
M ein 3-10-gliedriger Carbocyclus oder ein 4-10-gliedriger Heterocyclus aus Kohlenstoffatomen und 1-3 Heteroatomen N, O oder S ist,
G¹ Phenyl, Pyridyl, Pyrimidyl, Pyrazinyl oder Pyridazonyl ist,
G² ein 4-8-gliedriger monocyclischer oder bizyklischer Kohlenwasserstoffring mit 0 bis 2 C=C-Doppelbindungen ist und
R³⁷ und R¹³⁷ unabhängig voneinander H, -OH, F, Cl, Br, I, CN, C₁-C₄-Alkyl, OCH₃, OCH₂CH₃, OCH₂CH₂CH₃, O(CH₃)₂, OCF₃ oder Amino sind.

Beispielsweise kann der vorbeschriebene Faktor Xa-Hemmer bevorzugt Apixaban (Eliquis^{®}) sein, wie beispielsweise in der US 2003/191115 beschrieben.

In einer alternativen bevorzugten Ausgestaltung kann vorgesehen sein, dass der Faktor Xa-Hemmer ausgewählt ist aus
iii) einer Verbindung der folgenden Formel: 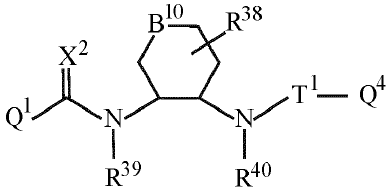 wobei Q¹ ein gesättigter oder ungesättigter 5- oder 6-gliedriger Kohlenwasserstoffring, eine gesättigte oder ungesättigte 5-7-gliedrige heterocyclische Gruppe, eine gesättigte oder ungesättigte bizyklisch oder trizyklisch fusionierte Kohlenwasserstoffgruppe oder eine gesättigte oder ungesättigte bizyklisch oder trizyklisch fusionierte heterocyclische Gruppe ist,
B¹⁰ N oder CH₂ ist,
X² O oder S ist,
R³⁸ H, OH, Alkoxy, Alkyl, Alkenyl, Alkinyl, Halogen, CN, Amino, Aminoalkyl, Acyl, Acylamino, Carbamoyl, Aryl oder Aralkyl ist,
R³⁹ und R⁴⁰ unabhängig voneinander H, OH, eine Alkylgruppe oder eine Alkoxygruppe sind,
Q⁴ eine Arylgruppe, eine Arylalkenylgruppe, eine Arylalkinylgruppe, eine Heteroarylgruppe, eine Heteroarylalkenylgruppe, eine gesättigte oder ungesättigte bizyklisch oder trizyklisch fusionierte Kohlenwasserstoffgruppe oder eine gesättigte oder ungesättigte bizyklisch oder trizyklisch fusionierte heterocyclische Gruppe ist und
T¹ eine Carbonylgruppe, eine Sulfonylgruppe, -C(=O)-C(=O)-, -C(=O)-C(=O)-NH-, -C(=O)-C(=O)-N(Alkyl)-, -C(=O)-(C₁₋₅-Alkylen)-N(Alkyl), -C(=O)-(C₁₋₅-Alkylen)-NH-, -C(=O)-(C₁₋₅-Alkylen)-C(=O)- oder -C(=O)-N=N- ist.

Beispielsweise kann der vorbeschriebene Faktor Xa-Hemmer bevorzugt Edoxaban (Lixiana^{®}) sein, wie in der EP 2 343 290 oder PE 2 374 456 beschrieben.

In einer alternativen bevorzugten Ausgestaltung kann vorgesehen sein, dass der Faktor Xa-Hemmer ausgewählt ist aus
iv) einer Verbindung der folgenden Formel: 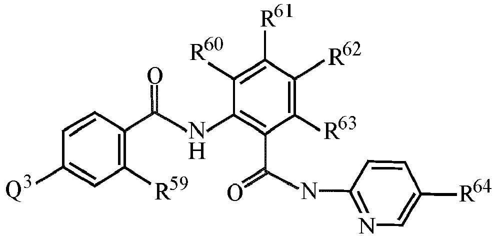 wobei Q³ ist: 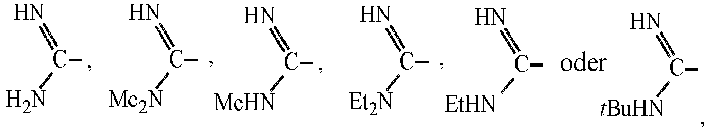 R⁵⁹ H, F, Cl oder Br ist,
R⁶⁰, R⁶¹, R⁶² und R⁶³ unabhängig voneinander H, F, Cl, Br, Me, NO₂, OH, OMe, NH₂, NHAc, NHSO₂Me, CH₂OH oder CH₂NH₂ sind und
R⁶⁴ F, Cl, Br, Me, OH oder OMe ist.

Beispielsweise kann der vorbeschriebene Faktor Xa-Hemmer bevorzugt Betrixaban (N-(5-Chlorpyridin-2-yl)-2-([4-(N,N-dimethylcarbamimidoyl)benzoyl]amino)-5-methoxybenzamid) sein, wie beispielsweise in der WO 01/64642 und WO 01/64643 beschrieben.

In einer alternativen bevorzugten Ausgestaltung kann vorgesehen sein, dass der Faktor Xa-Hemmer ausgewählt ist aus
v) einer Verbindung der folgenden Formel: 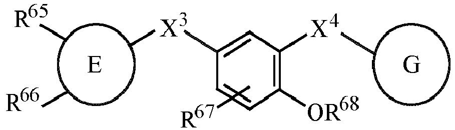 wobei E ein Benzolring oder ein 5- oder 6-gliedriger Heterocyclus mit 1 bis 4 Heteroatomen N, S oder O ist,
G ein Piperidinring oder ein Benzolring substituiert mit 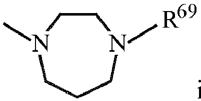 st, wobei R⁶⁹ H, C₁₋₆-Alkyl, -SO₂-(C₁₋₆-Alkyl) oder ein 5- oder 6-gliedriger Heterocyclus mit 1 bis 4 Heteroatomen N, S oder O ist,
X³ und X⁴ unabhängig voneinander -C(=O)-NH-, C(=O)-N(C₁- bis C₆-Alkyl), -NH-C(=O)-, -N(C₁- bis C₆-Alkyl)-C(=O)-, -CH₂-NH-, -CH₂-N(C₁- bis C₆-Alkyl)-, -NH-CH₂- oder -N-(C₁-C₆-Alkyl)-CH₂- sind,
R⁶⁵ Halogen, C₁- bis C₆-Alkyl oder C₁- bis C₆-Alkoxy ist,
R⁶⁶ und R⁶⁷ unabhängig voneinander H, Halogen, CN, NH-SO₂-(C₁₋₆-Alkyl), -NH-CO-(C₁₋₆-Alkyl), -CO-(C₁₋₆-Alkyl), -CO-(C₁₋₆-Alkoxy), -C(O)NH₂, C₁₋₆-Alkyl, C₁₋₆-Alkoxy oder S-(C₁₋₆-Alkyl) sind und
R⁶⁸ H, SO₃H oder ein Zuckerrest ist.

Beispielsweise kann der vorbeschriebene Faktor Xa-Hemmer bevorzugt Darexaban (N-(3-Hydroxy-2-{[4-(4-methyl-1,4-diazepan-1-yl)-benzoyl]amino}phenyl)-4-methoxybenzamid) sein, wie beispielsweise in der EP 1 336 605 beschrieben.

In einer alternativen bevorzugten Ausgestaltung kann vorgesehen sein, dass der Faktor Xa-Hemmer ausgewählt ist aus
vi) einer Verbindung der folgenden Formel: 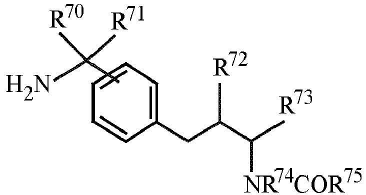 wobei R⁷⁰ und R⁷¹ unabhängig voneinander H oder =NR⁸² sind, wobei R⁸² eine der Gruppen R^{82a}O₂C-, R^{82a}O-, HO-, Amino, CN, R^{82a}CO-, HCO-, C₁₋₆-Alkyl, NO₂, Aralkyl oder Heteroaralkyl ist, wobei R^{82a} Alkyl, oder Aralkyl inklusive Heteroaralkyl ist,
R⁷² CO₂H, CO₂(C₁₋₆-Alkyl), CHO, -CH₂OH, -CH₂SH,-C(O)(C₁₋₆-Alkyl), -CONH₂, - CON(C₁₋₆-Alkyl)₂, -CH₂O(C₁₋₆-Alkyl), -CH₂O-Aryl, -CH₂S(C₁₋₆-Alkyl) oder CH₂S-Aryl ist,
R⁷³ H, Alkyl, Cycloalkyl, oder CH₂-Aryl ist,
R⁷⁴ H oder C₁₋₆-Alkyl ist und
R⁷⁵ Alkyl, Alkenyl oder Aryl ist.

Beispielsweise kann der vorbeschriebene Faktor Xa-Hemmer bevorzugt Otamixaban (Methyl (2R,3R)-2-{3-[amino(imino)methyl]benzyl}-3-{[4-(1-oxidopyridin-4-yl)benzoyl]amino}butanoat) sein, wie beispielsweise in der WO 97/24118 beschrieben.

In einer alternativen bevorzugten Ausgestaltung kann vorgesehen sein, dass der Faktor Xa-Hemmer ausgewählt ist aus
vii) einer Verbindung der folgenden Formel: 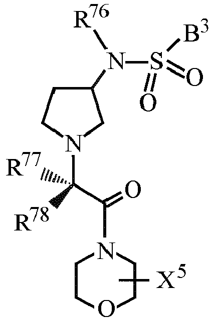 wobei X⁵ einer oder mehrere von (i) CF₃, F, COOH, C₁₋₆-Alkyl, -CONH₂, CONH(C₁₋₃-Alkyl), CON(C₁₋₃-Alkyl)₂, C(O)-Phenyl, ein 5- bis 6-gliedriger Cycloalkylrest, ein 5- bis 6-gliedrigen Heterocyclus mit wenigstens einem Heteroatom O, N oder S, oder (ii) einen zweiten Ring von Phenyl, einem 5- bis 6-gliedrigen Cycloalkylrest oder einem 5- bis 6-gliedrigen aromatischen Heterocyclus mit wenigstens einem Heteroatom O, N oder S, wobei der zweite Ring an den heterocyclischen Ring obiger Formel fusioniert ist,
B³ eine der folgenden Gruppen ist: 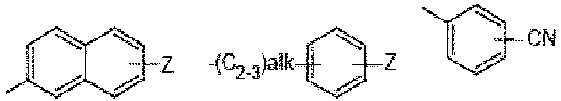 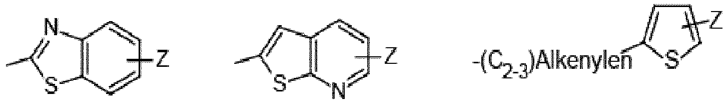 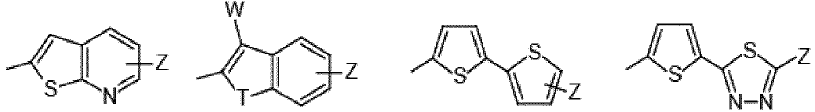 wobei alk C₂₋₃-Alkylen oder C₂₋₃-Alkenylen ist, T S, O oder N ist, W C₁₋₃-Alkyl ist und Z H, OH oder Halogen ist,
R⁷⁶ H, C₁₋₆-Alkyl, C₃₋₆-Alkenyl, Phenyl oder eine 5- bis 6-gliedrige aromatische heterocyclische Gruppe ist und
R⁷⁷ und R⁷⁸ unabhängig voneinander H, C₁₋₃-Alkyl oder CF₃ sind.

Beispiele für Faktor Xa-Hemmer der vorbeschriebenen Verbindung sind beispielsweise in der WO 02/100830 gezeigt.

In einer alternativen bevorzugten Ausgestaltung kann vorgesehen sein, dass der Faktor Xa-Hemmer ausgewählt ist aus
viii) einer Verbindung der folgenden Formel: 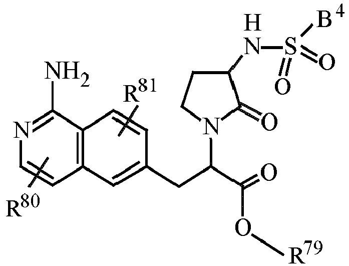 wobei B⁴ eine der folgenden Gruppen ist: 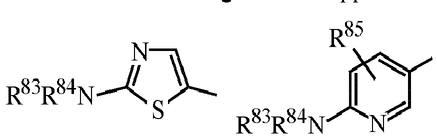 wobei R⁸³ und R⁸⁴ unabhängig voneinander eine C₁₋₆-Alkyl- oder C₃₋₇-Cycloalkylgruppe sind oder zusammen mit dem N-Atom, an das sie gebunden sind, eine 3-bis 7-gliedrige Heterocycloalkylgruppe mit 1 oder 2 Heteroatomen N, O oder S definieren,
R⁸⁵ H, Halogen, CN, C₁₋₆-Alkyl oder C₁₋₆-Alkoxy ist,
R⁷⁹ H, eine C₁₋₆-Alkylgruppe oder eine C₃₋₇-Cycloalkylgruppe ist,
R⁸⁰ H oder eine C₁₋₆-Alkylgruppe ist und
R⁸¹ OH, Halogen, CN, eine C₁₋₆-Alkylgruppe oder eine C₁₋₆-Alkoxygruppe ist.

Beispiele für Faktor Xa-Hemmer der vorbeschriebenen Verbindung sind beispielsweise in der WO 2013/092756 gezeigt.

In einer alternativen bevorzugten Ausgestaltung kann vorgesehen sein, dass der Faktor Xa-Hemmer ausgewählt ist aus
ix) einer Verbindung der folgenden Formel: 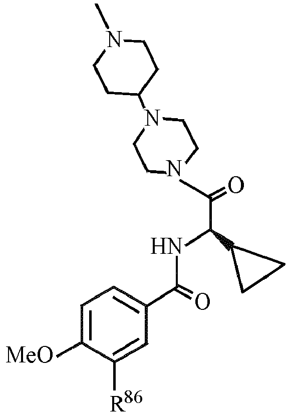 wobei R⁸⁶ Wasserstoff oder Fluor ist.

Beispiele für Faktor Xa-Hemmer der vorbeschriebenen Verbindung sind beispielsweise in der WO 03/084929 gezeigt.

### Faktor IIa-Hemmer:

Bevorzugt kann vorgesehen sein, dass die Zusammensetzung als Gerinnungsfaktorhemmer zumindest einen Faktor IIa-Hemmer aufweist, wobei der zumindest eine Faktor IIa-Hemmer vorzugsweise ein Thrombininhibitor ist. Besonders bevorzugt kann vorgesehen sein, dass der Thrombininhibitor ausgewählt ist aus der Gruppe bestehend aus den nachfolgend aufgelisteten Thrombininhibitoren i)-vi).

Es konnte gezeigt werden, dass sich diese Faktor IIa-Hemmer besonders gut für die Zusammensetzung eignen, da diese sich besonders vorteilhaft durch den p-GP-Inhibitor beeinflussen lassen und sich gut für eine orale Aufnahme eignen.

In einer bevorzugten Ausgestaltung kann vorgesehen sein, dass der Thrombininhibitor ausgewählt ist aus
i) einer Verbindung der folgenden Formel: 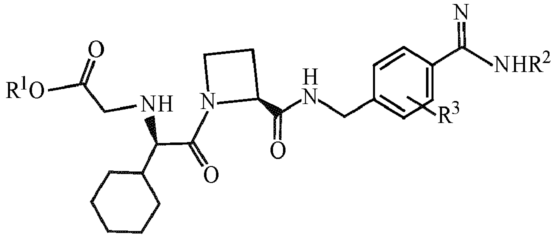 wobei R¹ H, C₁₋₄-Alkyl, C₁₋₄-Alkylphenyl, A¹C(O)N(R⁴)R⁵ oder A¹C(O)OR⁴ ist, wobei A¹ ein C₁₋₅-Alkylen, R⁴ und R⁵ unabhängig voneinander H, C₁₋₆-Alkyl, Phenyl, 2-Naphthyl oder im Fall von R¹ als A¹C(O)N(R⁴)R⁵ zusammen mit dem Stickstoffatom, an das sie gebunden sind, Pyrrolidinyl oder Piperidinyl sind,
R² OH, OC(O)R⁶ oder C(O)OR⁷ ist, wobei R⁶ ein C₁₋₁₇-Alkyl, Phenyl oder 2-Naphthyl ist, R⁷ ein C₁₋₃-Alkylphenyl, Phenyl, 2-Naphthyl, oder C₁₋₁₂-Alkyl ist, und
R³ H oder C₁₋₄-Alkyl ist.

Beispiele für Thrombininhibitoren der vorbeschriebenen Verbindung sind in der WO 1994/029336 und/oder WO 1997/23499 gezeigt. Beispielsweise ist Melagatran, ein Thrombininhibitor nach einer Ausgestaltung der vorliegenden Erfindung, der mit hoher Affinität reversibel am aktiven Zentrum des Thrombins bindet. Eine Prodrug-Form, Ximelagatran (Exanta, Exarta, Exantan^{®}), ist beispielsweise ebenfalls ein Thrombininhibitor nach einer bevorzugten Ausgestaltung.

In einer alternativen bevorzugten Ausgestaltung kann vorgesehen sein, dass der Thrombininhibitor ausgewählt ist aus
ii) einer Verbindung der folgenden Formel: 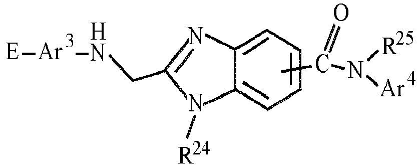 wobei R²⁴ C₁₋₆-Alkyl oder C₃₋₇-Cycloalkyl ist,
Ar³ eine Phenylen-, Naphthylen-, Thienylen-, Thiazolylen-, Pyridinylen-, Pyrimidinylen-, Pyrazinylen- oder Pyridazinylengruppe ist,
Ar⁴ eine Phenylgruppe oder eine 2-Pyridinylgruppe ist,
R²⁵ (a) eine C₁₋₃-Alkylgruppe, oder (b) eine durch eine Hydroxy-, Benzyloxy-, Carboxy-C₁₋₃-Alkylamino-, C₁₋₃-Alkoxycarbonyl-C₁₋₃-Alkylamino-, N-(C₁₋₃-Alkyl)-carboxy-C₁₋₃-alkylamino- oder N-(C₁₋₃-Alkyl)-C₁₋₃-alkoxycarbonyl-C₁₋₃-alkylaminogruppe substituierte C₂₋₃-Alkylgruppe ist,
E eine Cyano- oder R²⁶NH-C(=NH)-Gruppe ist, in der R²⁶ ein Wasserstoffatom, eine Hydroxygruppe, eine C₁₋₃-Alkylgruppe oder ein *in vivo* abspaltbarer Rest ist.

Beispiele für Thrombininhibitoren der vorbeschriebenen Verbindung sind beispielsweise in der WO 1998/37075 gezeigt. Beispielsweise ist Dabigatran ein Thrombininhibitor nach einer Ausgestaltung der vorliegenden Erfindung, der ein kompetitiver, reversibler und direkter Thrombininhibitoren ist. Ein Prodrug, Dabigatranetexilat (Pradaxa^{®}), das in vivo in Dabigatran umgewandelt wird, ist in der internationalen Patentanmeldung WO 03/074056 näher beschrieben und ist ebenfalls ein Thrombininhibitor nach einer Ausgestaltung der vorliegenden Erfindung.

In einer alternativen bevorzugten Ausgestaltung kann vorgesehen sein, dass der Thrombininhibitor ausgewählt ist aus
iii) einer Verbindung der folgenden Formel: 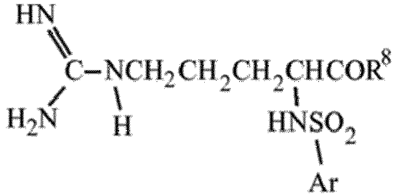 wobei Ar Phenyl, Chinolinyl, Tetrahydrochinolinyl, Naphthyl, Naphthochinon oder Indan ist, R⁸ 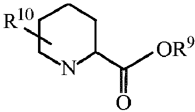 ist, wobei R⁹ H, ein C₁₋₁₀-Alkyl, ein C₆₋₁₀-Aryl, ein C₇₋₁₂-Aralkyl oder 5-Indanyl ist und R¹⁰ ein C₁₋₅-Alkyl oder Alkoxy ist.

Beispielsweise kann ein Thrombininhibitor der vorbeschriebenen Formel Argatroban (Argatra^{®}) ein Thrombininhibitor nach einer Ausgestaltung sein. Argatroban ist ein Argininderivat, das allerdings parenteral appliziert werden muss. Es kann jedoch in einer Mizellen-basierten Formulierung verabreicht werden, die auch oral aufgenommen wird. Eine solche Formulierung ist in der U.S.-Patentanmeldung US 5,679,690 beschrieben. Eine Lipidemulsion einer derartigen Verbindung ist auch in der Europäischen Patentanmeldung EP 0 608 828 offenbart. Ein festes Salz des Argatroban, das durch Präzipitation und Lyophilisation erhalten wird und für die orale Aufnahme geeignet sein soll, ist in der der U.S.-Patentanmeldung US 2009/0221637 offenbart.

In einer alternativen bevorzugten Ausgestaltung kann vorgesehen sein, dass der Thrombininhibitor ausgewählt ist aus
iv) einer Verbindung der folgenden Formel: 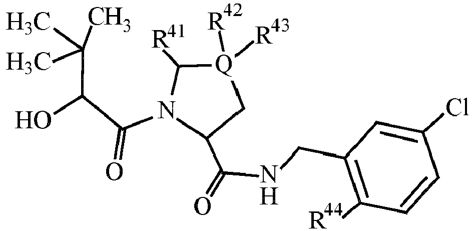 wobei Q C oder Si ist,
R⁴¹ H ist oder zusammen mit R⁴² einen C₃₋₈-Carbozyklus definiert,
R⁴² Halogen, CF₃, oder C₁₋₆-Alkyl ist oder zusammen mit R⁴³ einen C₃₋₈-Carbozyklus oder zusammen mit R⁴¹ einen C₃₋₈-Carbozyklus definiert,
R⁴³ H, Halogen, OH, C₁₋₆-Alkyl ist oder zusammen mit R⁴² einen C₃₋₈-Carbozyklus definiert,
R⁴⁴ ein Heterocyclus, -(CR⁴⁵R⁴⁶)₂NH₂ oder -(CR⁴⁵R⁴⁶)NH₂ ist, wobei R⁴⁵ und R⁴⁶ unabhängig voneinander H, C₁₋₆-Akyl, -CH₂F, -CHF₂, CF₃ oder -CH₂OH sind.
Beispiele für Thrombininhibitoren der vorbeschriebenen Verbindung sind beispielsweise in der WO 2014/058538 gezeigt.

In einer alternativen bevorzugten Ausgestaltung kann vorgesehen sein, dass der Thrombininhibitor ausgewählt ist aus
v) einer Verbindung der folgenden Formel: 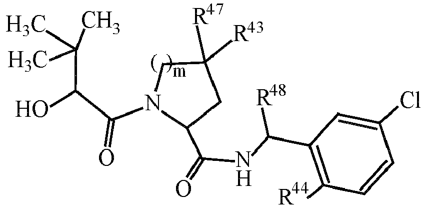 wobei m 0 oder 1 ist,
R⁴³ H, Halogen, OH, C₁₋₆-Alkyl ist oder zusammen mit R⁴⁷ einen C₃₋₈-Carbozyklus definiert,
R⁴⁴ ein Heterocyclus, -(CR⁴⁵R⁴⁶)₂NH₂ oder -(CR⁴⁵R⁴⁶)NH₂ ist, wobei R⁴⁵ und R⁴⁶ unabhängig voneinander H, C₁₋₆-Alkyl, -CH₂F, -CHF₂, CF₃ oder -CH₂OH sind,
R⁴⁷ H, Halogen, CF₃, C₁₋₆-Alkyl ist oder zusammen mit R⁴³ einen C₃₋₈-Carbozyklus definiert, und
R⁴⁸ C₁₋₆-Akyl ist.

Beispiele für Thrombininhibitoren der vorbeschriebenen Verbindung sind beispielsweise in der WO 2014/028318 gezeigt.

In einer alternativen bevorzugten Ausgestaltung kann vorgesehen sein, dass der Thrombininhibitor ausgewählt ist aus
vi) einer Verbindung der folgenden Formel:

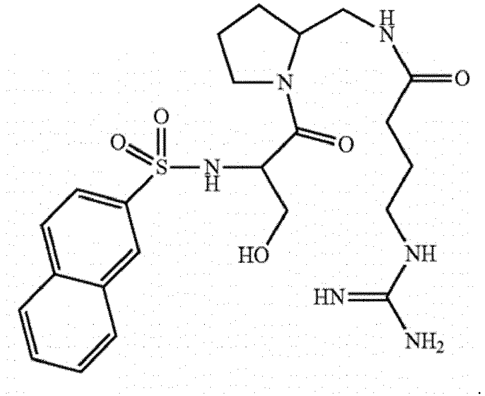

Der vorbeschriebene Thrombininhibitor ist auch unter dem Namen BMS 186282 bekannt, und beispielsweise beschrieben von Malley, M. F., Tabernero, L., Chang, C. Y., Ohringer, S. L., Roberts, D. G., Das, J., Sack, J. S.: Crystallographic determination of the structures of human alpha-thrombin complexed with BMS- 186282 and BMS- 189090.

Alternativ kann bevorzugt vorgesehen sein, dass die Zusammensetzung als Gerinnungsfaktorhemmer zumindest einen Faktor IIa-Hemmer aufweist, wobei der zumindest eine Faktor IIa-Hemmer vorzugsweise ein Thrombinrezeptorantagonist ist. Besonders bevorzugt kann vorgesehen sein, dass der Thrombinrezeptorantagonist ausgewählt ist aus der Gruppe bestehend aus den nachfolgend aufgelisteten Thrombinrezeptorantagonisten i)-iv)

Es konnte gezeigt werden, dass sich diese Faktor IIa-Hemmer und bevorzugten Thrombinrezeptorantagonisten besonders gut für die Zusammensetzung eignen, da diese sich besonders vorteilhaft durch den p-GP-Inhibitor beeinflussen lassen und sich gut für eine orale Aufnahme eignen.

In einer bevorzugten Ausgestaltung kann vorgesehen sein, dass der Thrombinrezeptorantagonist ausgewählt ist aus
i) einer Verbindung der folgenden Formel: 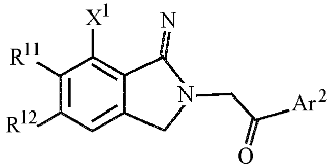 wobei Ar² eine Phenyl- oder eine Morpholinogruppe ist,
   X¹ H oder Halogen ist und
   R¹¹ und R¹² unabhängig voneinander H, Methoxy oder Ethoxy sind.

Beispiele für Thrombinrezeptorantagonisten der vorbeschriebenen Formel sind auch in der EP 1 813 282 beschrieben. Beispielsweise kann ein Thrombinrezeptorantagonist der vorbeschriebenen Verbindung Atopaxar sein, auch als E5555 bekannt. Atopaxar ist ein Hydrobromid mit dem IUPAC-Namen 1-(3-Tert-butyl-4-methoxy-5-morpholin-4-ylphenyl)-2-(5,6-diethoxy-4-fluoro-3-imino-1H-isoindol-2-yl)ethanone-Hydrobromid.

In einer alternativen bevorzugten Ausgestaltung kann vorgesehen sein, dass der Thrombinrezeptorantagonist ausgewählt ist aus
ii) einer Verbindung der folgenden Formel: 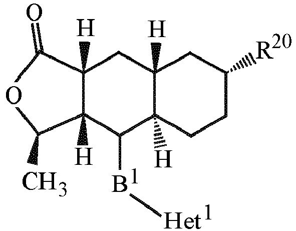 wobei Het¹ eine mono- oder bicyclische heteroaromatische Gruppe von 5 bis 10 Atomen ist, die 1 bis 9 Kohlenstoffatome und 1 bis 4 der Heteroatome N, O oder S enthält und
B¹ (CH₂)ₙ₁, cis oder trans-(CH₂)ₙ₂CR¹⁴=CR¹⁵(CH₂)ₙ₃ oder (CH₂)ₙ₂C≡C(CH₂)ₙ₃ ist, wobei n₁ 0 bis 5 und n₂ und n₃ unabhängig voneinander 0 bis 2 sind, R¹⁴ und R¹⁵ unabhängig voneinander H, C₁₋₆-Alkyl oder Halogen sind, und R²⁰ H, C₁₋₆-Alkyl, C₃₋₈-Cycloalkyl, - NHC(O)OR²¹, oder -NHC(O)R²¹ ist, wobei R²¹ H, C₁₋₆-Alkyl, C₁₋₆-Alkyl-OH, oder C₁₋₆-Alkoxy ist.

Beispiele für Thrombinrezeptorantagonisten der vorbeschriebenen Formel sind auch in der US 2003/216437 beschrieben. Beispielsweise kann ein Thrombinrezeptorantagonist der vorbeschriebenen Verbindung Vorapaxar (Zontivity^{®}) sein, auch als SCH 530348 bekannt. Dabei handelt es sich um N-[(3R,3aS,4S,4aR,7R, 8aR,9aR)-4-[(E)-2-[5-(3-Fluorophenyl)-2-pyridyl]vinyl]-3-methyl-1-oxo-3a,4,4a,5,6,7,8,8a,9,9a-decahydro-3H-benzo[f]isobenzofuran-7-yl]carbamat.

In einer alternativen bevorzugten Ausgestaltung kann vorgesehen sein, dass der Thrombinrezeptorantagonist ausgewählt ist aus
iii) einer Verbindung der folgenden Formel: 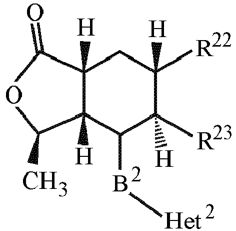 wobei Het² eine mono- oder bicyclische heteroaromatische Gruppe von 5 bis 14 Atomen ist, die 1 bis 13 Kohlenstoffatome und 1 bis 4 Heteroatome enthält,
B² (CH₂)ₙ₁, -CH₂-O-, -CH₂-S-,-CH₂-NR¹³-,-C(O)NR¹³-, -NR¹³C(O)-, 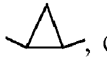 cis oder trans-(CH₂)ₙ₂CR¹⁴=CR¹⁵(CH₂)ₙ₃ oder (CH₂)ₙ₂C≡C(CH₂)ₙ₃ ist, wobei n₁ 0 bis 5 ist und n₂ und n₃ unabhängig voneinander 0 bis 2 sind, wobei R¹³ H, C₁₋₆-Alkyl, Phenyl, C₃₋₇-Cycloalkyl, (C₃₋₇-Cycloalkyl)-(C₁₋₆-Alkyl), (C₁₋₆-Alkoxy)-(C₁₋₆-Alkyl), (C₁₋₆-Alkyl)-OH oder -(C₁₋₆-Alkyl)-Amino ist, und R¹⁴ und R¹⁵ unabhängig voneinander H, C₁₋₆-Alkyl oder Halogen sind,
R²² und R²³ unabhängig voneinander H, R¹⁶(C₁₋₁₀-Alkyl), R¹⁶(C₂₋₁₀-Alkenyl), R¹⁶(C₂₋₁₀-Alkinyl), R¹⁶(C₁₋₁₀-Alkyl), Heterocycloalkyl, R¹⁷-Aryl, R¹⁷-Aryl)-(C₁-C₈-Alkyl), -OH, - OC(O)-R¹⁸, CO(O)R¹⁹ , -C(O)-R¹⁸, -C(O)N-R¹⁸R¹⁹ oder -N-R¹⁸R¹⁹ sind, wobei R¹⁶ und R¹⁷ unabhängig voneinander H, ein Halogen oder -OH sind, und R¹⁸ und R¹⁹ unabhängig voneinander H oder C₁₋₁₀-Alkyl sind.

Beispiele für Thrombinrezeptorantagonisten der vorbeschriebenen Verbindung sind beispielsweise in der WO 01/96330 gezeigt.

In einer alternativen bevorzugten Ausgestaltung kann vorgesehen sein, dass der Thrombinrezeptorantagonist ausgewählt ist aus
iv) einer Verbindung der folgenden Formel: 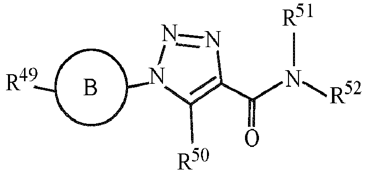 wobei B ein monocyclischer aromatischer Ring ist,
R⁴⁹ -NHCOR⁵³, -NHSO₂R⁵⁴, -NHCON(R⁵⁵)(R⁵⁶), -NHCOOR⁵⁷ oder -CONHR⁵⁸ ist, wobei R⁵³ bis R⁵⁸ unabhängig voneinander H, eine Kohlenwasserstoffgruppe, eine heterocyclische Gruppe oder eine Alkoxygruppe sind und
R⁵⁰ bis R⁵² unabhängig voneinander H, eine Kohlenwasserstoffgruppe, eine heterocyclische Gruppe oder eine Alkoxygruppe sind.

Beispiele für Thrombinrezeptorantagonisten der vorbeschriebenen Verbindung sind beispielsweise in der EP 1 867 331 gezeigt.

### Kombinationen von Gerinnungsfaktorhemmern:

Bevorzugt kann vorgesehen sein, dass die Zusammensetzung Gerinnungsfaktorhemmer zumindest einen Faktor Xa-Hemmer und zumindest einen Faktor IIa-Hemmer aufweist.

Dadurch kann erreicht werden, dass die Gerinnungshemmung auch bei vergleichsweise geringer Dosis beider Gerinnungsfaktorhemmern besonders stark ist. Ferner kann dadurch erreicht werden, dass das Risiko einer Kreuzkontamination bei Raubtieren oder Aasfressern besonders gering ist, da beide Gerinnungsfaktorhemmer unterschiedlich metabolisiert werden.

Ohne an eine Theorie gebunden zu sein, wird davon ausgegangen, dass die Kombination eines Faktor Xa-Hemmer und eines Faktor IIa-Hemmers besonders effizient ist, weil zwei Gerinnungsfaktoren gehemmt werden, die sich normalerweise bei funktionierender Gerinnungshemmung potenzieren, wodurch eine effiziente Gerinnungshemmung auch bei noch geringeren Dosen erreicht werden kann.

Somit kann durch die Kombination dieser Gerinnungsfaktorhemmer eine Wirkung erreicht werden, die über die Wirkung der einzelnen Gerinnungsfaktorhemmer hinaus geht.

### Zusätzliche Thrombozytenaggregationshemmer:

Bevorzugt kann vorgesehen sein, dass die Zusammensetzung zusätzlich aufweist: c) zumindest einen Thrombozytenaggregationshemmer.

Durch die zusätzliche Hemmung der Thrombozytenaggregation kann erreicht werden, dass nicht nur einzelne Gerinnungsfaktoren, wie beispielsweise die Gerinnungsfaktoren der Endstrecken der intrinsischen und der extrinsischen Blutgerinnungskaskade, direkt gehemmt werden, sondern auch die Aggregationsfähigkeit der Gerinnungsfaktoren in die entsprechenden Gerinnungsfaktoren-Komplexe im Allgemeinen. Dadurch kann insbesondere erreicht werden, dass die Gerinnungshemmung weiter potenziert wird.

Somit kann durch den zusätzlichen Thrombozytenaggregationshemmer eine Wirkung erreicht werden, die über die Wirkung der Gerinnungsfaktorhemmer und der Thrombozytenaggregationshemmer alleine hinausgeht.

Bevorzugt kann vorgesehen sein, dass der zumindest eine Thrombozytenaggregationshemmer ausgewählt ist aus der Gruppe bestehend aus Cyclooxygenasehemmern, P2Y12-Rezeptorantagonisten, Phosphodiesterasehemmern und Glycoprotein-GPIIb/IIIa-Rezeptorantagonisten.

Bevorzugt kann vorgesehen sein, dass der Thrombozytenaggregationshemmer ein Cyclooxygenasehemmer ist, ausgewählt aus der Gruppe bestehend aus einer Verbindung der folgenden Formel i).

Es konnte gezeigt werden, dass sich diese Thrombozytenaggregationshemmer besonders gut für die Zusammensetzung eignen, da sie eine Potenzierung der Gerinnung durch die Gerinnungsfaktoren besonders effizient hemmen.

In einer bevorzugten Ausgestaltung kann vorgesehen sein, dass der Cyclooxygenasehemmer ausgewählt ist aus
i) einer Verbindung der folgenden Formel:

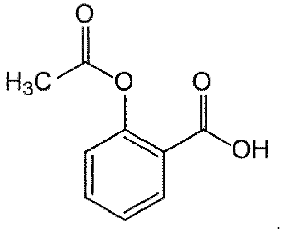

Bevorzugt kann vorgesehen sein, dass der Thrombozytenaggregationshemmer ein P2Y12-Rezeptorantagonist ist, ausgewählt aus der Gruppe bestehend aus einer Verbindung der folgenden Formeln i)-ix).

Es konnte gezeigt werden, dass sich diese Thrombozytenaggregationshemmer besonders gut für die Zusammensetzung eignen, da sie eine Potenzierung der Gerinnung durch die Gerinnungsfaktoren besonders effizient hemmen.

In einer bevorzugten Ausgestaltung kann vorgesehen sein, dass der P2Y12-Rezeptorantagonist ausgewählt ist aus
i) einer Verbindung der folgenden Formel: 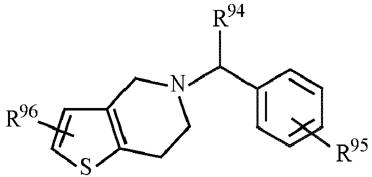 wobei R⁹⁴ H, Halogen, Hydroxy oder C₁₋₆-Alkyl ist,
   R⁹⁵ H, Halogen, Hydroxy, Nitro, C₁₋₆-Alkyl oder C₁₋₆-Alkoxy ist und
   R⁹⁶ H oder Halogen ist.

Beispielsweise kann eine vorbeschriebene Verbindung Ticlopidin (Tiklyd^{®}) sein, wie in US 4,051,141 und US 4,591,592 beschrieben. Nach einer Ausgestaltung kann der P2Y12-Rezeptorantagonist auch ein Prodrug sein, das *in vivo* in einen aktiven Metaboliten der vorbeschriebenen Verbindung umgewandelt werden kann.

In einer alternativen bevorzugten Ausgestaltung kann vorgesehen sein, dass der P2Y12-Rezeptorantagonist ausgewählt ist aus
ii) einer Verbindung der folgenden Formel: 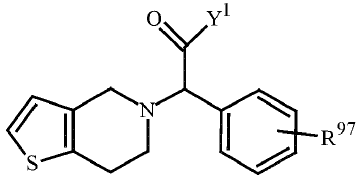 wobei Y¹ -OR⁹⁸ oder -N(R⁹⁹)R¹⁰⁰ ist, wobei R⁹⁹ und R¹⁰⁰ unabhängig voneinander H, Halogen oder eine C₁₋₄-Alkylgruppe sind und R⁹⁸ H oder C₁₋₄-Alkyl ist und
R⁹⁷ H, Halogen oder eine C₁₋₄-Alkylgruppe ist.

Beispielsweise kann eine vorbeschriebene Verbindung Clopidogrel (Iscovera, Plavix^{®}) sein, ein oral verabreichbarer Thrombozytenaggregationshemmer gemäß EP 0 099 802 und US 4,529,596. Nach einer Ausgestaltung kann der P2Y12-Rezeptorantagonist auch ein Prodrug sein, das erst *in vivo* in einen aktive Metaboliten umgewandelt wird und in der US 4,847,265 beschrieben ist.

In einer alternativen bevorzugten Ausgestaltung kann vorgesehen sein, dass der P2Y12-Rezeptorantagonist ausgewählt ist aus
iii) einer Verbindung der folgenden Formel: 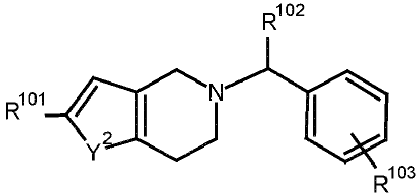 wobei R¹⁰¹ H, OH, Amino, C₁- bis C₄-Alkoxy, Ar-C₁₋₄-alkyloxy, C₁₋₁₈-Alkanoyloxy, C₃₋₆-Alkenoyloxy oder Arylcarbonyloxy ist,
R¹⁰² C₁₋₁₀-Alkanoyl, C₃₋₆-Alkenoyl, C₄₋₈-Cycloalkylcarbonyl mit 3 bis 7 Ringatomen, substituiertes Benzoyl und 5,6-Dihydro-1,4,2-dioxazin-3-yl ist,
Y² NH, O oder S ist und
R¹⁰³ H, Halogen, OH, Amino, C₁₋₄-Alkyl, C₁₋₄-Alkoxy, C₁₋₄-Alkylthio oder eine CarboxyGruppe ist.

Beispielsweise kann der P2Y12-Rezeptorantagonist Prasugrel ((RS)-[5-[2-Cyclopropyl-1-(2-fluorphenyl)-2-oxoethyl]-6,7-dihydro-4H-thieno[3,2-c]pyridin-2-yl]acetat) sein, wie in EP 0 099 802 bzw. US 5,288,726 beschrieben, ein Prodrug, das *in vivo* in einen Thiol enthaltenden aktiven Metaboliten umgewandelt wird.

In einer alternativen bevorzugten Ausgestaltung kann vorgesehen sein, dass der P2Y12-Rezeptorantagonist ausgewählt ist aus
iv) einer Verbindung der folgenden Formel: 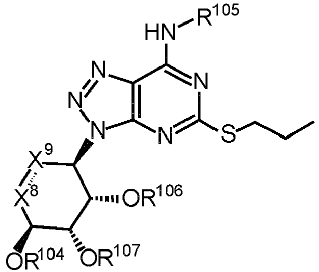 wobei R¹⁰⁴ H, Halogen, Hydroxy-C₁₋₈-Alkyl, C₁₋₈-Alkoxy-C₁₋₈-Alkyl oder Carboxy-C₁₋₈-Alkyl ist,
R¹⁰⁵ C₁₋₈-Alkyl, C₁₋₈-Alkoxy-C₁₋₈-Alkylthio-C₁₋₈-Alkyl, C₃₋₈-Cycloalkyl-C₁₋₈-Alkyl, Phenyl-C₁₋₈-Alkyl, Heterocyclyl, Heterocyclyl-C₁₋₈-Alkyl, Heteroaryl-Ci-s-Alkyl oder Halo-C₁₋₈-Alkyl ist,
R¹⁰⁶ und R¹⁰⁷ unabhängig voneinander H sind oder zusammen mit den Kohlenstoffatomen, an die sie gebunden sind, einen 5- oder 6-gliedrigen Heterocyclus definieren und
X⁸ und X⁹ unabhängig voneinander CH, CH₂ oder CH(OH) sind und
-̅-̅-̅-̅-̅ eine Einfachbindung oder eine Doppelbindung ist.

Beispiele für P2Y12-Rezeptorantagonisten der vorbeschriebenen Verbindung sind in der WO 2008/054796 beschrieben.

In einer alternativen bevorzugten Ausgestaltung kann vorgesehen sein, dass der P2Y12-Rezeptorantagonist ausgewählt ist aus
v) einer Verbindung der folgenden Formel: 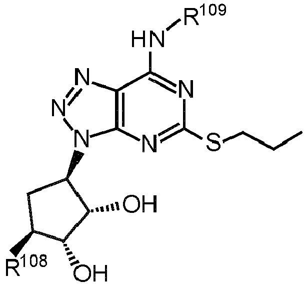 wobei R¹⁰⁸ Heterocyclyl, Heterocyclyl-C₁₋₈-Alkyl, Heteroaryl, Heteroaryl-C₁₋₈-Alkyl oder Halo-C₁₋₈-Alkyl ist und
R¹⁰⁹ C₁₋₈-Alkyl, C₁₋₈-Alkoxy-C₁₋₈-Alkylthio-C₁₋₈-Alkyl, C₃₋₈-Cycloalkyl, C₃₋₈-Cycloalkyl-C₁₋₈-Alkyl, Phenyl-C₁₋₈-Alkyl, Heterocyclyl-C₁₋₈-Alkyl, Heteroaryl-C₁₋₈-Alkyl oder Halo-C₁₋₈-Alkyl ist.

Beispiele für P2Y12-Rezeptorantagonisten der vorbeschriebenen Verbindung sind in der WO 2008/054795 beschrieben.

In einer alternativen bevorzugten Ausgestaltung kann vorgesehen sein, dass der P2Y12-Rezeptorantagonist ausgewählt ist aus
vi) einer Verbindung der folgenden Formel: 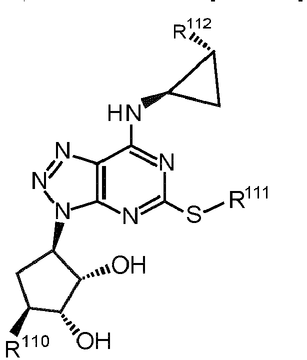 wobei R¹¹⁰ OH, CH₂OH oder OCH₂CH₂OH ist,
R¹¹¹ C₃₋₅-Alkyl ist,
R¹¹² Phenyl, inklusive mit einem oder mehreren F substituiertes Phenyl, ist.

Beispielsweise kann eine vorbeschriebene Verbindung Ticagrelor (Brilinta^{®}, Brilique^{®}, Possia^{®}) sein, wie in der WO 2000/34283 beschrieben.

In einer alternativen bevorzugten Ausgestaltung kann vorgesehen sein, dass der P2Y12-Rezeptorantagonist ausgewählt ist aus
vii) einer Verbindung der folgenden Formel: 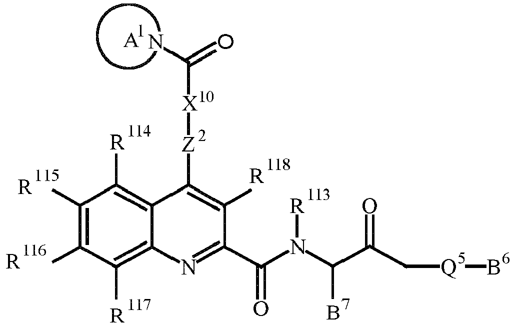 wobei R¹¹³ H oder C₁₋₄-Alkyl ist,
R¹¹⁴ bis R¹¹⁸ unabhängig voneinander H, C₁₋₆-Alkyl, C₁₋₃-Fluoroalkyl, Halogen, CN oder Phenyl sind,
X¹⁰ C₃₋₈-Alkylenyl, C₁₋₃-Cycloalkylenyl oder C₃₋₁₅-Heterocyclyl ist,
Z² Alkylenyl, Alkenyl oder Alkinyl ist,
A¹ ein 3- bis 10-gliedriger heterocyclischer mono-, bicyclischer oder spiroheterocyclischer Ring ist, der 0, 1, 2 oder 3 zusätzliche Heteroatome von N, S oder O enthält,
Q⁵ ein mono- oder bicyclischer 3- bis 15-gliedriger Heterocyclus ist und
B⁶ und B⁷ unabhängig voneinander H, C₁₋₄-Alkyl, C₃₋₈-Cycloalkyl, C₆₋₁₄-Aryl, ein 3- bis 7-gliedriger Heterocyclus, -C(O)OH, -CNH₂, -C(O)NH-(C₁₋₆-Alkyl), -C(O)O-(C₁₋₆-Alkyl) oder -C(O)N(R)-R sind.

Beispiele für P2Y12-Rezeptorantagonisten der vorbeschriebenen Verbindung sind in der WO 2008/128647 beschrieben.

In einer alternativen bevorzugten Ausgestaltung kann vorgesehen sein, dass der P2Y12-Rezeptorantagonist ausgewählt ist aus
viii) einer Verbindung der folgenden Formel: 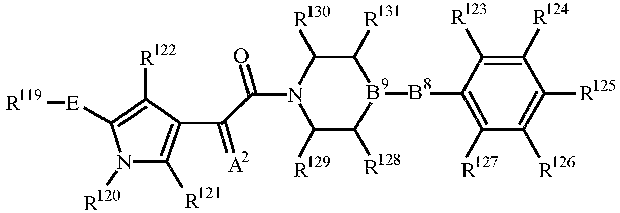 wobei A² O oder N-OH ist,
B⁸ eine kovalente Bindung, -C(O)- oder Methylenyl ist,
B⁹ N oder CH ist,
E eine kovalente Bindung, -O-C(O)- oder -NH-C(O)- ist,
R¹¹⁹ H, C₁₋₈-Alkyl-, C₀₋₄-Alkylen-(C₃₋₈-Cycloalkyl), C₀₋₄-Alkylen-(C₆₋₄-Aryl) oder C₀₋₄-Alkylen-Heterozyklyl ist,
R¹²⁰ H, -NH-C(O)- oder -O-C(O)- ist,
R¹²¹ C₁₋₈-Alkyl-, CF₃, oder (C₁₋₈-Alkylen-)-C(O)-O-R¹³² und R¹²² H, Halogen, C₁- bis C₈-Alkyl-, (C₁₋₈-Alkylen-)-C(O)-O-R¹³², (C₂₋₆-Alkenylen-)-C(O)-O-R¹³² oder C₃₋₇-Cycloalkyl)-C(O)-O-R¹³² sind, wobei R¹³² H, C₁- bis Cs-Alkyl- oder C₀₋₄-Alkylen-(C₃₋₈-Cycloalkyl) ist,
R¹²³ bis R¹²⁷ unabhängig voneinander H, Halogen, CN, NO₂, C₁₋₈-Alkyl-, C₀₋₄-Alkylen-O-R¹³², (C₀₋₄-Alkylen-)-C(O)-O-R¹³², (C₀₋₄-Alkylen-)-C(O)-R¹³², (C₀₋₄-Alkylen-)-C(O)-N-R¹³²R¹³³ oder (C₀₋₄-Alkylen)-CN-R¹³²R¹³³ sind, wobei R¹³³ H oder C₁- bis C₈-Alkyl- ist und R¹²⁸ bis R¹³¹ unabhängig voneinander H, =O, -OH oder C₁- bis C₈-Alkyl- sind.

Beispiele für P2Y12-Rezeptorantagonisten der vorbeschriebenen Verbindung sind in der WO 2008/155022 beschrieben.

In einer alternativen bevorzugten Ausgestaltung kann vorgesehen sein, dass der P2Y12-Rezeptorantagonist ausgewählt ist aus
ix) einer Verbindung der folgenden Formel: 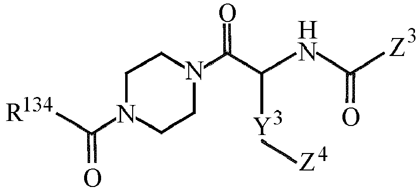 wobei Z³ ein substituierter -2-Thiazolring oder -4-Thiazolring ist, wobei ein -2-Thiazolring an Position 4 mit H, einer Arylgruppe und/oder an Position 5 mit H, Halogen, C₁-bis C₄-Alkyl-, C₂- bis C₄-Alkenyl-, Phenyl oder di-C₁₋₆-Alkylaminio substituiert ist und ein -4-Thiazolring an Position 2 mit H oder einer Arylgruppe und/oder an Position 5 mit H, Halogen, COOH, C₁- bis C₄-Alkyl-, COO(C₁₋₄-Alkyl-), C₂₋₄-Alkenyl-, Phenyl, C₁₋₄-Alkylamino, di-C₁₋₄-Alkylamino, Heterocyclyl oder 2-Methoxymethyl-cycloprop-1-yl substituiert ist,
Y³-Z⁴ entweder eine Bindung und H repräsentieren, oder Y³ C₁- bis C₃-Alkandiyl ist und Z⁴ H, OH, Phenyl, -COOH, -COO(C₁₋₄-Alkyl), -P(O)(OH)₂, -P(O)(O-[C₁₋₄-Alkyl])₂, -P(O)(O-[C₁₋₄-Alkoxy]-C(O)O-CH₂)₂ oder -P(O)(NH[C₁₋₄-Alkoxy]-C(O)-[C₁₋₄-Alkyl])₂ ist und
R¹³⁴ C₁- bis C₆-Alkoxy ist

Beispiele für P2Y12-Rezeptorantagonisten der vorbeschriebenen Verbindung sind in der WO 2010/122504 beschrieben.

Bevorzugt kann vorgesehen sein, dass der Thrombozytenaggregationshemmer ein Glycoprotein-GPIIb/IIIa-Rezeptorantagonist ist, ausgewählt aus der Gruppe bestehend aus einer Verbindung der folgenden Formeln i)-vi).

Es konnte gezeigt werden, dass sich diese Thrombozytenaggregationshemmer besonders gut für die Zusammensetzung eignen, da sie eine Potenzierung der Gerinnung durch die Gerinnungsfaktoren besonders effizient hemmen.

In einer bevorzugten Ausgestaltung kann vorgesehen sein, dass der Glycoprotein-GPIIb/IIIa-Rezeptorantagonist ausgewählt ist aus
i) einer Verbindung der folgenden Formel: 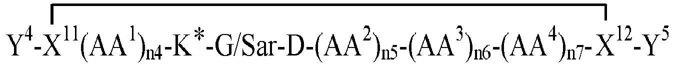 wobei Y⁴ und Y⁵ unabhängig voneinander ein nicht-interferierender Substituent oder abwesend sind,
K* ein substituierter oder unsubstituierter Lysylrest der Formel R¹³⁵R¹³⁶₂N(CH₂)₄CHNHCO ist, wobei R¹³⁵ und R¹³⁶ unabhängig voneinander H oder C₁- bis C₆-Alkyl sind,
X¹¹ und X¹² unabhängig voneinander ein beliebiger Rest sind, der die gezeigte Ringbildung zwischen X¹¹ und X¹² ermöglicht,
(AA¹) eine kleine neutrale Aminosäure ist und n₄ eine Zahl von 0 bis 3 ist,
(AA²) eine große unpolare Aminosäure und n₅ ist eine Zahl von 0 bis 3 ist,
(AA³) ein Prolinrest oder ein modifizierter Prolinrest ist und n₆ 0 oder 1 ist und
(AA⁴) eine kleine, neutrale Aminosäure oder eine N-alkylierte Form davon und n₇ eine Zahl von 0 bis 3 ist.

Beispielsweise kann der Glycoprotein-GPIIb/IIIa-Rezeptorantagonisten in einer Ausgestaltung ein Arginin-Glycin-Aspartat-Mimetikum wie beispielsweise das Peptid Eptifibatid (Integrilin^{®}) sein.

In einer bevorzugten Ausgestaltung kann vorgesehen sein, dass der Glycoprotein-GPIIb/IIIa-Rezeptorantagonist ausgewählt ist aus
ii) einer Verbindung der folgenden Formel: 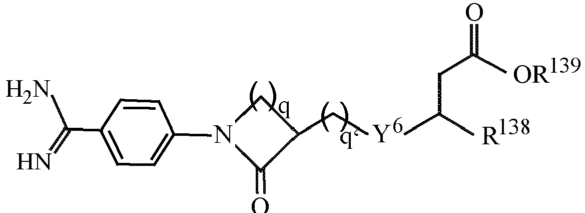 wobei 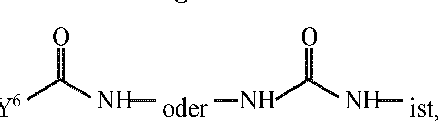 q 2 oder 3 ist,
q' eine ganze Zahl von 0 bis 4 ist,
R¹³⁸ H, C₁- bis C₆-Alkyl-, C₁- bis C₈-Alkoxy-, C₁- bis C₈-Alkoxycarbonyl-, C₂- bis C₆-Alkenyl, C₂- bis C₆-Alkinyl, Cycloalkyl oder Aryl ist,
R¹³⁹ C₁- bis C₆-Alkyl-, C₂- bis C₆-Alkenyl, C₂- bis C₆-Alkinyl, Alkoxycarbonyloxyalkyl, und
C₃- bis C₆-Cycloalkyl oder Aryl ist.

In einer Ausgestaltung kann der Glycoprotein-GPIIb/IIIa-Rezeptorantagonisten beispielsweise Orbofiban (Ethyl N-{[(3S)-1-(4-carbamimidoylphenyl)-2-oxo-3-pyrrolidinyl]-carbamoyl}-β-alaninat) sein, wie beispielsweise in der US 5,721,366 beschrieben.

In einer bevorzugten Ausgestaltung kann vorgesehen sein, dass der Glycoprotein-GPIIb/IIIa-Rezeptorantagonist ausgewählt ist aus
iii) einer Verbindung der folgenden Formel: 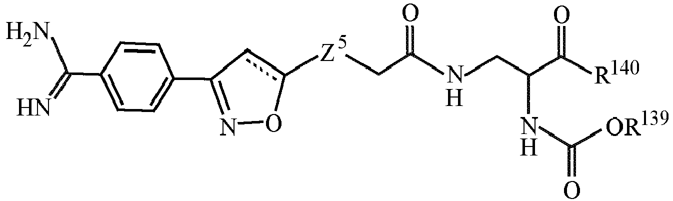 wobei Z⁵ eine kovalente Einfachbindung, C₁- bis C₇-Alkyl-, C₂- bis C₇-Alkenyl oder C₂-bis C₇-Alkinyl ist,
R¹³⁹ C₁- bis C₆-Alkyl-, C₂- bis C₆-Alkenyl, C₂- bis C₆-Alkinyl, Alkoxycarbonyloxyalkyl, C₃- bis C₆-Cycloalkyl oder Aryl ist,
R¹⁴⁰ Hydroxy, C₁- bis C₁₀-Alkoxy-, C₃- bis C₁₀-Alkylcarbonyloxyalkyloxy- oder C₇- bis C₁₁-Aralkyloxy- ist und
-̅-̅-̅-̅-̅ eine Einfachbindung oder eine Doppelbindung ist.

In einer Ausgestaltung kann der Glycoprotein-GPIIb/IIIa-Rezeptorantagonisten beispielsweise Roxifiban (DMP 754, MK 0853, XJ 754, Lumaxis^{®}, Methyl-N³-[2-{3-(4-formamidinophenyl)-isoxazolin-5-(*R*)-yl}-acetyl]-N²-(n-butyloxycarbonyl)-2,3-(*S*)-diaminopropionat) sein, wie in der WO 95/14683 beschrieben.

In einer bevorzugten Ausgestaltung kann vorgesehen sein, dass der Glycoprotein-GPIIb/IIIa-Rezeptorantagonist ausgewählt ist aus
iv) einer Verbindung der folgenden Formel: 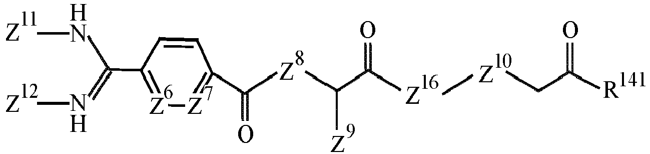 wobei eins von Z⁶ und Z⁷ CH und das andere CH, C₁- bis C₈-Alkyl-, C₁- bis C₈-Alkoxy oder N ist,
Z⁸ NH, C₁- bis Cs-Alkyl-N oder C₁- bis C₈-Alkoxy-(C₁- bis C₈-Alkyl-)N ist,
Z⁹ H oder ggf. durch OH, SH, CONH₂, CONH- C₁- bis Cs-Alkyl, C₁- bis C₈-Alkylthio, Aryl, NH₂, NH-(C₁- bis Cs-Alkyl-), N(C₁- bis C₈-Alkyl-)(C₁- bis Cs-Alkyl-) oder O-(C₁- bis C₈-Alkyl-) subsituiertes C₁- bis C₈-Alkyl ist,
Z¹⁰ O, CH₂, NH, Acyl-N oder C₁- bis C₈-Alkyl-OC(O)N ist,
Z¹¹ und Z¹² H, C₁- bis C₈-Alkyl, OH, C₁- bis C₈- Alkoxy, C₁- bis C₈-Alkoxy- C₁- bis C₈-alkyl, Carboxy- C₁- bis C₈-alkyl, P(O)(O-C₁- bis C₈-Alkyl)₂, C(O)O-C₁- bis Cs-Alkyl, OC(O)-C₁- bis Cs-Alkyl, OC(O)O-C₁- bis C₈-Alkyl oder C(O)S-C₁- bis C₈-Alkyl sind, wobei zumindest eins von Z¹¹ und Z¹² H ist oder Z¹¹ und Z¹² zusammen mit den N-Atomen, an die sie gebunden sind, eine (5,5-Dimethyl- oder 5-Oxo)-4,5-dihydro-1,2,4-oxadiazol-3-ylgruppe sind,
Z¹⁶ ein über das N-Atom an die Ketogruppe gebundenes 1,4-Piperidinylen oder optional durch C₁- bis C₈-Alkyl, C₁- bis C₈-Alkoxy, OCH₂COOH oder OCH₂COO-(C₁- bis C₈-Alkyl) substituiertes 1,4-Phenylen ist, und
R¹⁴¹ NH₂, NH(-C₁- bis C₈-Alkyl), NH-(C₁- bis C₈-Alkyl-)COOH, NH-(C₁- bis C₈-Alkyl)-COO-(C₁- bis C₈-Alkyl), C₁- bis Cs-Alkyloxy oder C₁- bis Cs-Alkenyloxy ist.

In einer Ausgestaltung kann der Glycoprotein-GPIIb/IIIa-Rezeptoantagonisten beispielsweise Sibrafiban (Ro 48-3657, Xubix^{®}) sein, wie in der EP 0 656 348 beschrieben.

In einer bevorzugten Ausgestaltung kann vorgesehen sein, dass der Glycoprotein-GPIIb/IIIa-Rezeptorantagonist ausgewählt ist aus
v) einer Verbindung der folgenden Formel: 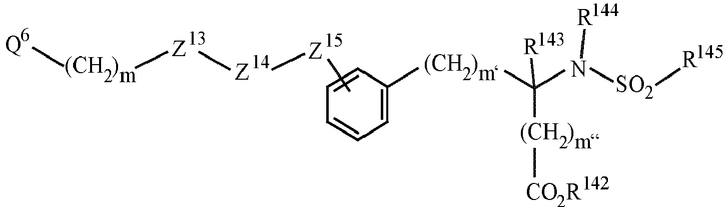 wobei Q⁶ ein vier- bis achtgliedriger heterozyklischer Ring ist, der 1, 2, 3 oder 4 Heteroatome aufweist, die N, O oder S sind,
m eine ganze Zahl von 0 bis 8 ist,
m' und m" unabhängig voneinander eine ganze Zahl von 0 bis 2 sind,
Z¹³ und Z¹⁴ unabhängig voneinander Phenyl, O, SO₂, 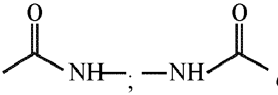 oder ein 5- oder 6-gliedriger Ring sind, der 0 oder 1 Heteroatome aus N oder O enthält,
Z¹⁵ eine optionale vorhandene Gruppe ist, die O, -NHCO-, -CONH- oder C₁- bis C₅-Alkyl-OC(O)N ist,
R¹⁴² H oder C₁- bis C₈-Alkyl ist,
R¹⁴³ und R¹⁴⁴ unabhängig voneinander H, C₁- bis C₄-Alkyl oder C₄- bis C₁₀-Aralkyl sind, und
R¹⁴⁵ Aryl, C₁- bis C₁₀-Alkyl oder -Cycloalkyl oder C₄- bis C₁₀-Aralkyl ist.

Beispiele für Glycoprotein-GPIIb/IIIa-Rezeptorantagonisten der vorbeschriebenen Verbindung sind beispielweise in der WO 93/19046 beschrieben.

In einer bevorzugten Ausgestaltung kann vorgesehen sein, dass der Glycoprotein-GPIIb/IIIa-Rezeptorantagonist ausgewählt ist aus
vi) einer Verbindung der folgenden Formel: 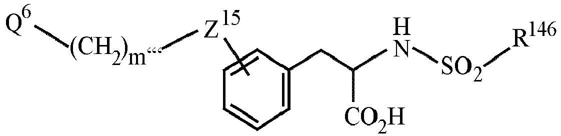 wobei Q⁶ ein sechsgliedriger heterozyklischer Ring ist, der 1 oder 2 Heteroatome aufweist, die N sind,
m'" eine ganze Zahl von 2 bis 6 ist, 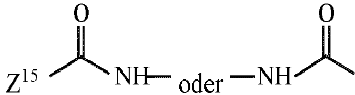 ist und
R¹⁴⁶ Aryl, C₁- bis C₁₀-Alkyl oder C₄- bis C₁₀-Aralkyl ist.

In einer Ausgestaltung kann der Glycoprotein-GPIIb/IIIa-Rezeptorantagonist beispielsweise Tirofiban ((*S*)-2-(Butylsulfonamino)-3-(4-[4-(piperidin-4-yl)butoxy]phenyl)-propansäure, Aggrastat^{®}) sein, wie in der WO 93/19046 beschrieben.

In einer bevorzugten Ausgestaltung kann vorgesehen sein, dass der Glycoprotein-GPIIb/IIIa-Rezeptorantagonist ausgewählt ist aus der Gruppe der sogenannten Fibane bestehend aus Fradafiban, Lamifiban, Lefrafiban, Lotrafiban, Orbofiban, Roxifiban, Sibrafiban und Xemilofiban.

Bevorzugt kann vorgesehen sein, dass die Zusammensetzung zumindest zwei Thrombozytenaggregationshemmer aufweist, wobei vorzugsweise zumindest ein Thrombozytenaggregationshemmer ein Cyclooxygenasehemmer ist und zumindest ein Thrombozytenaggregationshemmer ein P2Y12-Rezeptorantagonist oder ein Glycoprotein-GPIIb/IIIa-Rezeptorantagonist ist.

Dadurch kann vorteilhafterweise eine besonders effiziente Hemmung der Thrombozytenaggregation erreicht werden. Somit kann erreicht werden, dass die Dosis besonders geringgehalten werden kann, wodurch die Umwelt geschont werden kann und das Risiko einer Kreuzkontamination weiter reduziert werden kann.

### P-GP-Inhibitoren:

Bevorzugt kann der p-GP-Inhibitor ausgewählt sein aus der Medikamentengruppen bestehend aus: der Gruppe der Klasse C-Antiarrhythmika wie z.B. Amiodaron und Drondedaron; Calcium-Antagonisten wie z.B. Diltiazem und Verapamil; HMG-CoA-Reduktasehemmer oder Statine wie z.B. Atorvastatin, Rosuvastatin, Lovostatin und Simvastatin; Macrolidantibiotika wie z.B. Clarithromycin, Roxythromycin und Erythromycin; Gyrasehemmer wie z.B. Moxifloxacin, Ofloxacin; Azolamid-Antimykotika wie z.B. Fluconazol, Vericonazol, Ketokonazol, und Itrokonazol; Anti-Malaria-Mittel wie z.B. Mefloquin und Chinidin; HIV-Medikamente wie z.B. Retonavir, Nefinavir, Sequinavir und Elacridar; Zytostatika wie z.B. Tamoxifen und Cyclosporin; Immunsuppresiva und Zellzyklusinhibitoren wie z.B. Takrolimus und Ciclosporin; Protonenpumpenhemmer wie z.B. Lansoprazol und Omeprazol; sowie der Antiemetikum wie z.B. Odansetron.

Bevorzugt kann vorgesehen sein, dass der zumindest eine p-GP-Inhibitor ausgewählt ist aus der Gruppe bestehend aus einer Verbindung der folgenden Formeln i)-ix).

In einer bevorzugten Ausgestaltung kann vorgesehen sein, dass der p-GP-Inhibitor ausgewählt ist aus
i) einer Verbindung der folgenden Formeln: 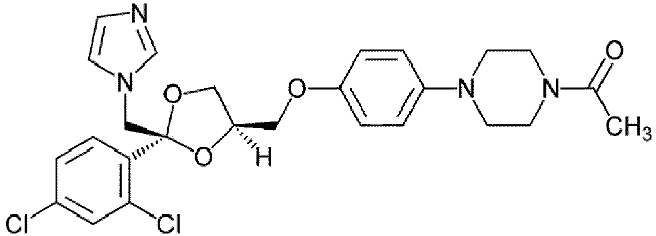 oder 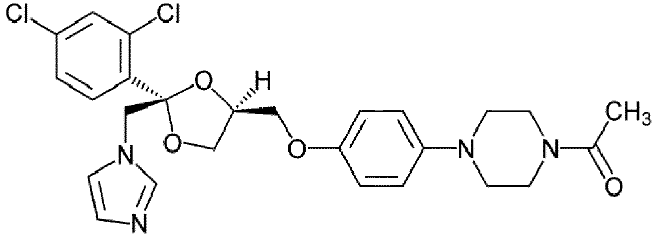 oder einer Mischung davon, insbesondere einem Racemat davon.

Der vorbeschriebene p-GP-Inhibitor ist auch unter dem Namen Ketoconazol (Nizoral^{®}) bekannt.

In einer alternativen bevorzugten Ausgestaltung kann vorgesehen sein, dass der p-GP-Inhibitor ausgewählt ist aus
ii) einer Verbindung der folgenden Formel:

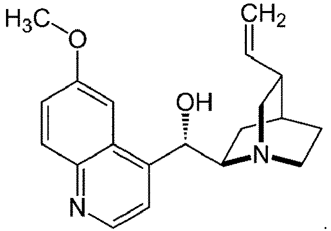

Der vorbeschriebene p-GP-Inhibitor ist auch unter dem Namen Chinidin (Duriles^{®}) bekannt.

In einer alternativen bevorzugten Ausgestaltung kann vorgesehen sein, dass der p-GP-Inhibitor ausgewählt ist aus
iii) einer Verbindung der folgenden Formel:

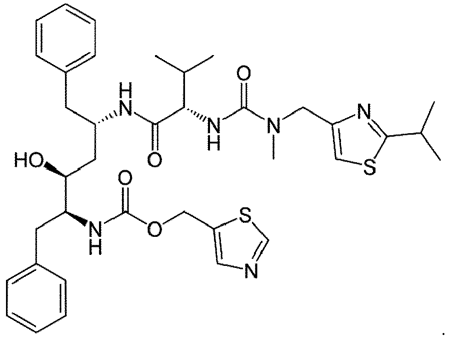

Der vorbeschriebene p-GP-Inhibitor ist auch unter dem Namen Ritonavir (Norvir^{®}) bekannt.

In einer alternativen bevorzugten Ausgestaltung kann vorgesehen sein, dass der p-GP-Inhibitor ausgewählt ist aus
iv) einer Verbindung der folgenden Formeln: 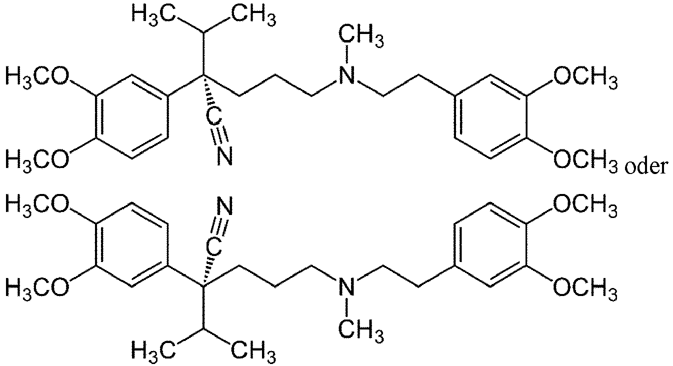 oder einer Mischung davon, insbesondere einem Racemat davon.

Der vorbeschriebene p-GP-Inhibitor ist auch unter dem Namen Verapramil (Isoptin^{®}) bekannt.

In einer alternativen bevorzugten Ausgestaltung kann vorgesehen sein, dass der p-GP-Inhibitor ausgewählt ist aus
v) einer Verbindung der folgenden Formel:

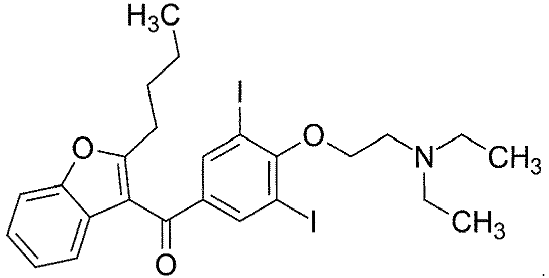

Der vorbeschriebene p-GP-Inhibitor ist auch unter dem Namen Aminodaron (Cordarone^{®}) bekannt.

In einer alternativen bevorzugten Ausgestaltung kann vorgesehen sein, dass der p-GP-Inhibitor ausgewählt ist aus
vi) einer Verbindung der folgenden Formel:

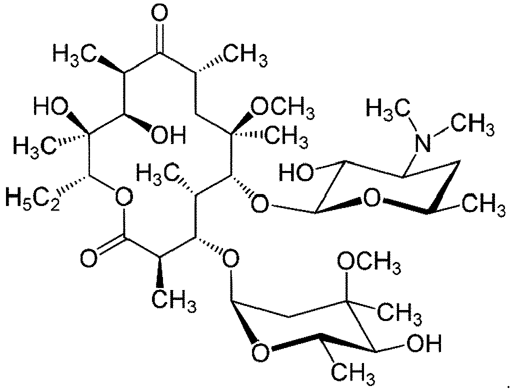

Der vorbeschriebene p-GP-Inhibitor ist auch unter dem Namen Clarithromycin (Klacid^{®}) bekannt.

In einer alternativen bevorzugten Ausgestaltung kann vorgesehen sein, dass der p-GP-Inhibitor ausgewählt ist aus
vii) einer Verbindung der folgenden Formel:

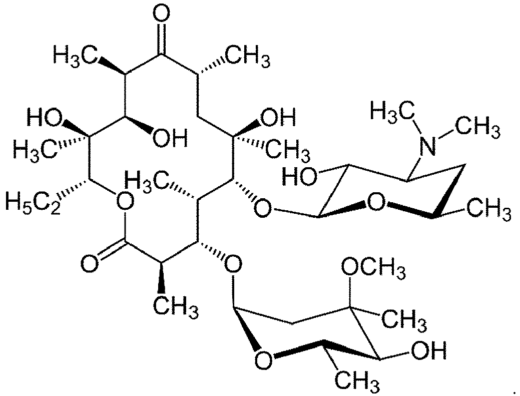

Der vorbeschriebene p-GP-Inhibitor ist auch unter dem Namen Erythromycin (Erythrocin^{®}) bekannt.

In einer alternativen bevorzugten Ausgestaltung kann vorgesehen sein, dass der p-GP-Inhibitor ausgewählt ist aus
viii) einer Verbindung der folgenden Formeln: 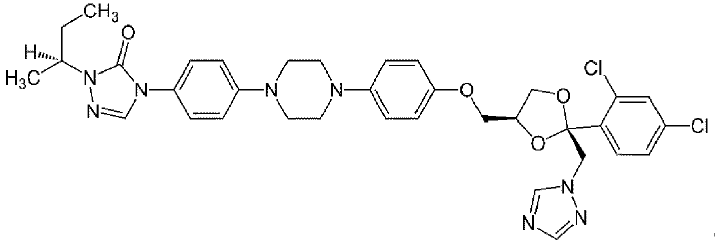 oder 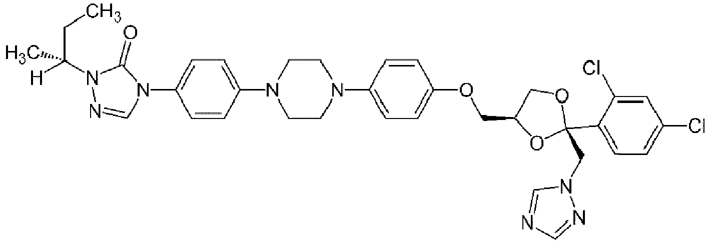 oder einer Mischung davon, insbesondere einem Racemat davon.

Der vorbeschriebene p-GP-Inhibitor ist auch unter dem Namen Itraconazol (Sporanox^{®}) bekannt.

In einer alternativen bevorzugten Ausgestaltung kann vorgesehen sein, dass der p-GP-Inhibitor ausgewählt ist aus
ix) einer Verbindung der folgenden Formel:

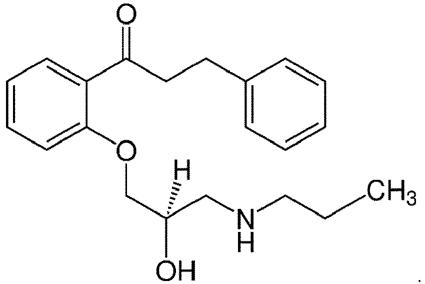

Der vorbeschriebene p-GP-Inhibitor ist auch unter dem Namen Propafenon (Rytmonorm^{®}) bekannt.

### Weitere Gegenstände:

Mit der Erfindung wird ferner die Verwendung einer vorbeschriebenen Zusammensetzung als Rodentizid vorgeschlagen. Darunter ist zu verstehen, dass die Zusammensetzung zur Bekämpfung von Schadnagetieren verwendet wird.

Beispielsweise kann die Zusammensetzung in einem Schadnagetierköder vorgesehen sein, der ausgebracht wird, so dass er von den zu bekämpfenden Schadnagetieren als Nahrung aufgenommen wird.

Mit der Erfindung wird ferner auch ein Schadnagetierköder, enthaltend die vorbeschriebene Zusammensetzung vorgeschlagen.

Beispielsweise kann vorgesehen sein, dass der Schadnagetierköder einen Träger und die vorbeschriebene Zusammensetzung aufweist. Der Träger kann insbesondere eine für Schadnagetiere attraktive Zusammensetzung aufweisen, beziehungsweise für das Schadnagetier geeignete Nahrung.

In einigen Ausführungsformen kann eine hier offenbarte Zusammensetzung mit einer Zusammensetzung kombiniert werden, die ein Getreidemehl, eine Getreidekleie, ein Geliermittel, einen Zucker, ein Öl, einen Emulgator und ein Feuchthaltemittel enthält, wie beispielsweise in der internationalen Patentanmeldung WO 2014/186885 beschrieben.

Bevorzugt kann vorgesehen sein, dass der Schadnagetierköder die Zusammensetzung in einer Menge aufweist, die bei einer für das Schadnagetier normalen Futtermengenaufnahme keine akute Toxizität hervorruft. Dadurch kann erreicht werden, dass einerseits die Toxizität des Schadnagetierköders bei versehentlicher Ingestion durch andere Tiere oder beispielsweise durch Menschen nicht sofort akut lebensbedrohlich ist. Ferner kann dadurch erreicht werden, dass die Wirkung des Schadnagetierköders erst bei wiederholter Aufnahme eintritt, so dass die Schadnagetiere kein Vermeidungsverhalten gegenüber dem Schadnagetierköder ausbilden.

Der Schadnagetierköder kann beispielsweise Samen und / oder Getreide enthalten. Der Schadnagetierköder kann beispielsweise in Form von Granulat (engl. Pellets), in Form von verpacktem Getreide oder verpacktem Granulat oder als Köderblock vorgelegt werden. In einigen Ausführungsformen kann eine hier offenbarte Zusammensetzung in einem Köderblock enthalten sein, der ein polymeres Bindemittel in Form eines Polymers auf Basis eines Acrylsäureesters und Acrylnitril enthält, wie er beispielsweise in der internationalen Patentanmeldung WO 2014/064272 beschrieben ist.

Ferner wird mit der Erfindung ein Verfahren zur Bekämpfung von Schadnagetieren vorgeschlagen, wobei ein vorbeschriebener Schadnagetierköder ausgebracht wird.

Beispielsweise kann vorgesehen sein, dass der Schadnagetierköder in Verbindung mit einer Köderstation eingesetzt wird, beispielsweise wie sie kommerziell erhältlich ist. Dadurch kann Beispielsweise erreicht werden, dass der Schadnagetierköder nicht von größeren Tieren gefressen wird.

Die unterschiedlichen Wirkkomponenten können den Tieren in unterschiedlichen Ködern als Pellets, Pasten, Frassköder etc. angeboten werden, deren Basis sich grundsätzlich aus den folgenden Komponenten zusammensetzen kann: 20 - 70% Gew.-% Kohlehydraten, 5 - 50% Gew.-% Fett, 10 - 40% Gew.-% Eiweiß und Rest Wasser, Kochsalz und Zucker.

Bevorzugt kann vorgesehen sein, dass die einzelnen Komponenten der vorbeschriebenen Zusammensetzung jeweils in einer Konzentration in einem Bereich von größer 0 ppm bis kleiner oder gleich 100 ppm bezogen auf das Gesamtgewicht des Schadnagetierköders enthalten sind.

## Patentansprüche

1. Zusammensetzung zur Bekämpfung von Schadnagetieren, **dadurch gekennzeichnet, dass** die Zusammensetzung aufweist:
a) zumindest einen direkten Gerinnungsfaktorhemmer und
b) zumindest einen P-Glykoprotein-Inhibitor (p-GP-Inhibitor).

2. Zusammensetzung nach Anspruch 1, **dadurch gekennzeichnet, dass** der Gerinnungsfaktorhemmer ausgewählt ist aus der Gruppe bestehend aus Faktor Xa-Hemmern und Faktor IIa-Hemmern.

3. Zusammensetzung nach einem der Ansprüche 1 oder 2, **dadurch gekennzeichnet, dass** die Zusammensetzung als Gerinnungsfaktorhemmer zumindest einen Faktor Xa-Hemmer aufweist, wobei der zumindest eine Faktor Xa-Hemmer vorzugsweise ausgewählt ist aus der Gruppe bestehend aus:
i) einer Verbindung der folgenden Formel: 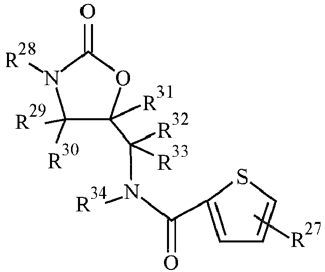 wobei R²⁷ Halogen, Cyano, Nitro, Amino, Aminomethyl, C₁₋₈-Alkyl, C₃₋₇-Cycloalkyl, C₁₋₈-Alkoxy, Imidazolinyl, -C(=NH)NH₂, Carbamoyl oder Mono- und Di-(C₁₋₄)-alkyl-aminocarbonyl ist und
R²⁸, R²⁹, R³⁰, R³¹, R³², R³³ und R³⁴ unabhängig voneinander H oder C₁₋₆-Alkyl sind;
ii) einer Verbindung der folgenden Formel: 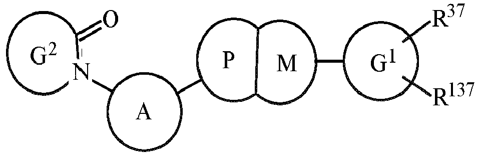 wobei A ein C₃-C₁₀-Carbocyclus oder ein 5-12-gliedriger Heterocyclus aus Kohlenstoffatomen und 1-4 Heteroatomen N, O oder S ist,
P ein 5-7-gliedriger Carbocyclus oder ein 5-7-gliedriger Heterocyclus aus Kohlenstoffatomen und 1-3 Heteroatomen N, O oder S ist und 0-3 Doppelbindungen im Zyklus enthält,
M ein 3-10-gliedriger Carbocyclus oder ein 4-10-gliedriger Heterocyclus aus Kohlenstoffatomen und 1-3 Heteroatomen N, O oder S ist,
G¹ Phenyl, Pyridyl, Pyrimidyl, Pyrazinyl oder Pyridazonyl ist,
G² ein 4-8-gliedriger monocyclischer oder bizyklischer Kohlenwasserstoffring mit 0 bis 2 C=C-Doppelbindungen ist und
R³⁷ und R¹³⁷ unabhängig voneinander H, -OH, F, Cl, Br, I, CN, C₁-C₄-Alkyl, OCH₃, OCH₂CH₃, OCH₂CH₂CH₃, O(CH₃)₂, OCF₃ oder Amino sind;
iii) einer Verbindung der folgenden Formel: 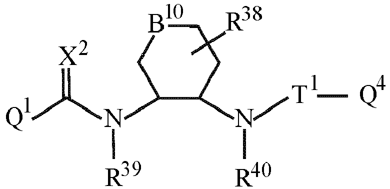 wobei Q¹ ein gesättigter oder ungesättigter 5- oder 6-gliedriger Kohlenwasserstoffring, eine gesättigte oder ungesättigte 5-7-gliedrige heterocyclische Gruppe, eine gesättigte oder ungesättigte bizyklisch oder trizyklisch fusionierte Kohlenwasserstoffgruppe oder eine gesättigte oder ungesättigte bizyklisch oder trizyklisch fusionierte heterocyclische Gruppe ist,
B¹⁰ N oder CH₂ ist,
X² O oder S ist,
R³⁸ H, OH, Alkoxy, Alkyl, Alkenyl, Alkinyl, Halogen, CN, Amino, Aminoalkyl, Acyl, Acylamino, Carbamoyl, Aryl oder Aralkyl ist,
R³⁹ und R⁴⁰ unabhängig voneinander H, OH, eine Alkylgruppe oder eine Alkoxygruppe sind,
Q⁴ eine Arylgruppe, eine Arylalkenylgruppe, eine Arylalkinylgruppe, eine Heteroarylgruppe, eine Heteroarylalkenylgruppe, eine gesättigte oder ungesättigte bizyklisch oder trizyklisch fusionierte Kohlenwasserstoffgruppe oder eine gesättigte oder ungesättigte bizyklisch oder trizyklisch fusionierte heterocyclische Gruppe ist und
T¹ eine Carbonylgruppe, eine Sulfonylgruppe, -C(=O)-C(=O)-, -C(=O)-C(=O)-NH-, -C(=O)-C(=O)-N(Alkyl)-, -C(=O)-(C₁₋₅-Alkylen)-N(Alkyl), -C(=O)-(C₁₋₅-Alkylen)-NH-, -C(=O)-(C₁₋₅-Alkylen)-C(=O)- oder -C(=O)-N=N- ist;
iv) einer Verbindung der folgenden Formel: 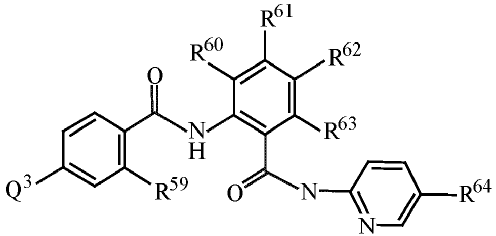 wobei Q³ ist: 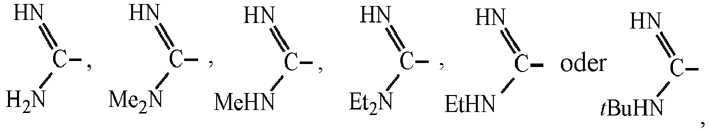 R⁵⁹ H, F, Cl oder Br ist,
R⁶⁰, R⁶¹, R⁶² und R⁶³ unabhängig voneinander H, F, Cl, Br, Me, NO₂, OH, OMe, NH₂, NHAc, NHSO₂Me, CH₂OH oder CH₂NH₂ sind und
R⁶⁴ F, Cl, Br, Me, OH oder OMe ist;
v) einer Verbindung der folgenden Formel: 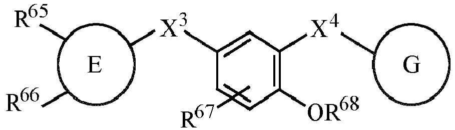 wobei E ein Benzolring oder ein 5- oder 6-gliedriger Heterocyclus mit 1 bis 4 Heteroatomen N, S oder O ist,
G ein Piperidinring oder ein Benzolring substituiert mit 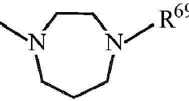 ist, wobei R⁶⁹ H, C₁-₆-Alkyl, -SO₂-(C₁-₆-Alkyl) oder ein 5- oder 6-gliedriger Heterocyclus mit 1 bis 4 Heteroatomen N, S oder O ist,
X³ und X⁴ unabhängig voneinander -C(=O)-NH-, C(=O)-N(C₁- bis C₆-Alkyl), -NH-C(=O)-, -N(C₁- bis C₆-Alkyl)-C(=O)-, -CH₂-NH-, -CH₂-N(C₁- bis C₆-Alkyl)-, -NH-CH₂- oder -N-(C₁-C₆-Alkyl)-CH₂- sind,
R⁶⁵ Halogen, C₁- bis C₆-Alkyl oder C₁- bis C₆-Alkoxy ist,
R⁶⁶ und R⁶⁷ unabhängig voneinander H, Halogen, CN, NH-SO₂-(C₁₋₆-Alkyl), -NH-CO-(C₁₋₆-Alkyl), -CO-(C₁₋₆-Alkyl), -CO-(C₁₋₆-Alkoxy), -C(O)NH₂, C₁₋₆-Alkyl, C₁₋₆-Alkoxy oder S-(C₁₋₆-Alkyl) sind und
R⁶⁸ H, SO₃H oder ein Zuckerrest ist;
vi) einer Verbindung der folgenden Formel: 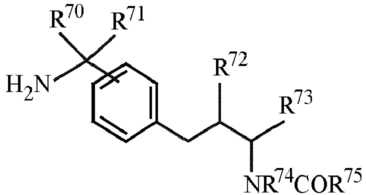 wobei R⁷⁰ und R⁷¹ unabhängig voneinander H oder =NR⁸² sind, wobei R⁸² eine der Gruppen R^{82a}O₂C-, R^{82a}O-, HO-, Amino, CN, R^{82a}CO-, HCO-, C₁₋₆-Alkyl, NO₂, Aralkyl oder Heteroaralkyl ist, wobei R^{82a} Alkyl, oder Aralkyl inklusive Heteroaralkyl ist,
R⁷² CO₂H, CO₂(C₁₋₆-Alkyl), CHO, -CH₂OH, -CH₂SH, -C(O)(C₁₋₆-Alkyl), -CONH₂, - CON(C₁₋₆-Alkyl)₂, -CH₂O(C₁₋₆-Alkyl), -CH₂O-Aryl, -CH₂S(C₁₋₆-Alkyl) oder CH₂S-Aryl ist,
R⁷³ H, Alkyl, Cycloalkyl, oder CH₂-Aryl ist,
R⁷⁴ H oder C₁₋₆-Alkyl ist und
R⁷⁵ Alkyl, Alkenyl oder Aryl ist;
vii) einer Verbindung der folgenden Formel: 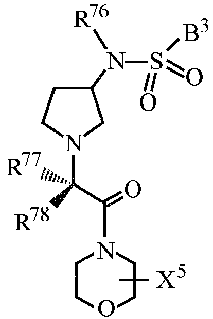 wobei X⁵ einer oder mehrere von (i) CF₃, F, COOH, C₁₋₆-Alkyl, -CONH₂, CONH(C₁₋₃-Alkyl), CON(C₁₋₃-Alkyl)₂, C(O)-Phenyl, ein 5- bis 6-gliedriger Cycloalkylrest, ein 5- bis 6-gliedrigen Heterocyclus mit wenigstens einem Heteroatom O, N oder S, oder (ii) einen zweiten Ring von Phenyl, einem 5- bis 6-gliedrigen Cycloalkylrest oder einem 5- bis 6-gliedrigen aromatischen Heterocyclus mit wenigstens einem Heteroatom O, N oder S, wobei der zweite Ring an den heterocyclischen Ring obiger Formel fusioniert ist,
B³ eine der folgenden Gruppen ist: 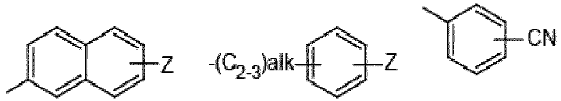 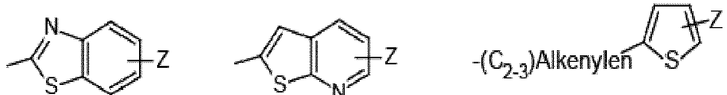 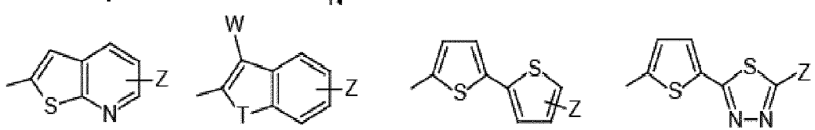 wobei alk C₂₋₃-Alkylen oder C₂₋₃-Alkenylen ist, T S, O oder N ist, W C₁₋₃-Alkyl ist und Z H, OH oder Halogen ist,
R⁷⁶ H, C₁₋₆-Alkyl, C₃₋₆-Alkenyl, Phenyl oder eine 5- bis 6-gliedrige aromatische heterocyclische Gruppe ist und
R⁷⁷ und R⁷⁸ unabhängig voneinander H, C₁₋₃-Alkyl oder CF₃ sind;
viii) einer Verbindung der folgenden Formel: 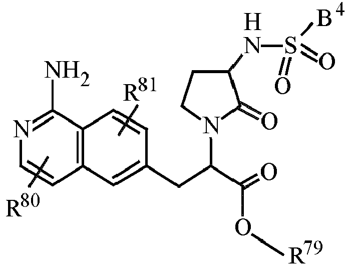 wobei B⁴ eine der folgenden Gruppen ist: 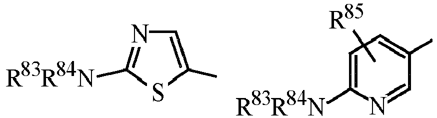 wobei R⁸³ und R⁸⁴ unabhängig voneinander eine C₁₋₆-Alkyl- oder C₃₋₇-Cycloalkylgruppe sind oder zusammen mit dem N-Atom, an das sie gebunden sind, eine 3-bis 7-gliedrige Heterocycloalkylgruppe mit 1 oder 2 Heteroatomen N, O oder S definieren,
R⁸⁵ H, Halogen, CN, C₁₋₆-Alkyl oder C₁₋₆-Alkoxy ist,
R⁷⁹ H, eine C₁₋₆-Alkylgruppe oder eine C₃₋₇-Cycloalkylgruppe ist,
R⁸⁰ H oder eine C₁₋₆-Alkylgruppe ist und
R⁸¹ OH, Halogen, CN, eine C₁₋₆-Alkylgruppe oder eine C₁₋₆-Alkoxygruppe ist; oder
ix) einer Verbindung der folgenden Formel: 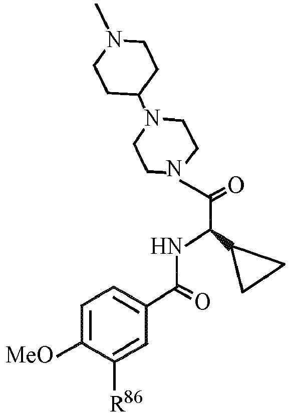 wobei R⁸⁶ Wasserstoff oder Fluor ist.

4. Zusammensetzung nach einem der Ansprüche 1 bis 3, **dadurch gekennzeichnet, dass** die Zusammensetzung als Gerinnungsfaktorhemmer zumindest einen Faktor IIa-Hemmer aufweist, wobei der zumindest eine Faktor IIa-Hemmer vorzugsweise ein Thrombininhibitor ist, besonders bevorzugt ausgewählt aus der Gruppe bestehend aus:
i) einer Verbindung der folgenden Formel: 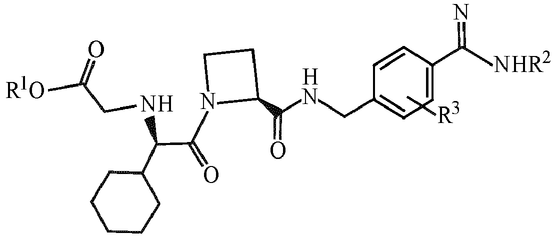 wobei R¹ H, C₁₋₄-Alkyl, C₁₋₄-Alkylphenyl, A¹C(O)N(R⁴)R⁵ oder A¹C(O)OR⁴ ist, wobei A¹ ein C₁₋₅-Alkylen, R⁴ und R⁵ unabhängig voneinander H, C₁₋₆-Alkyl, Phenyl, 2-Naphthyl oder im Fall von R¹ als A¹C(O)N(R⁴)R⁵ zusammen mit dem Stickstoffatom, an das sie gebunden sind, Pyrrolidinyl oder Piperidinyl sind,
R² OH, OC(O)R⁶ oder C(O)OR⁷ ist, wobei R⁶ ein C₁₋₁₇-Alkyl, Phenyl oder 2-Naphthyl ist, R⁷ ein C₁₋₃-Alkylphenyl, Phenyl, 2-Naphthyl, oder C₁₋₁₂-Alkyl ist, und
R³ H oder C₁₋₄-Alkyl ist;
ii) einer Verbindung der folgenden Formel: 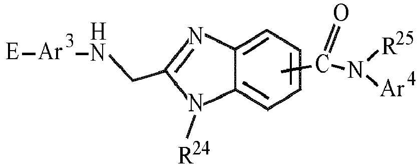 wobei R²⁴ C₁₋₆-Alkyl oder C₃₋₇-Cycloalkyl ist,
Ar³ eine Phenylen-, Naphthylen-, Thienylen-, Thiazolylen-, Pyridinylen-, Pyrimidinylen-, Pyrazinylen- oder Pyridazinylengruppe ist,
Ar⁴ eine Phenylgruppe oder eine 2-Pyridinylgruppe ist,
R²⁵ (a) eine C₁₋₃-Alkylgruppe, oder (b) eine durch eine Hydroxy-, Benzyloxy-, Carboxy-C₁-₃-Alkylamino-, C₁-₃-Alkoxycarbonyl-C₁-₃-Alkylamino-, N-(C₁-₃-Alkyl)-carboxy-C₁-₃-alkylamino- oder N-(C₁-₃-Alkyl)-C₁₋₃-alkoxycarbonyl-C₁₋₃-alkylaminogruppe substituierte C₂₋₃-Alkylgruppe ist,
E eine Cyano- oder R²⁶NH-C(=NH)-Gruppe ist, in der R²⁶ ein Wasserstoffatom, eine Hydroxygruppe, eine C₁₋₃-Alkylgruppe oder ein *in vivo* abspaltbarer Rest ist;
iii) einer Verbindung der folgenden Formel: 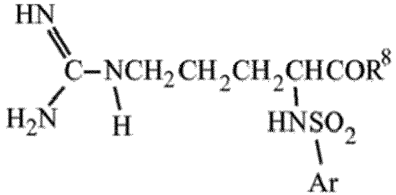 wobei Ar Phenyl, Chinolinyl, Tetrahydrochinolinyl, Naphthyl, Naphthochinon oder Indan ist,
R⁸ 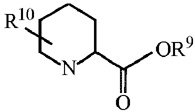 ist, wobei R⁹ H, ein C₁₋₁₀-Alkyl, ein C₆₋₁₀-Aryl, ein C₇₋₁₂-Aralkyl oder 5-Indanyl ist und R¹⁰ ein C₁₋₅-Alkyl oder Alkoxy ist;
iv) einer Verbindung der folgenden Formel: 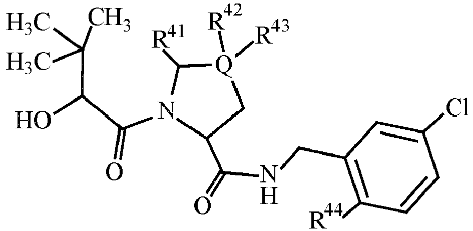 wobei Q C oder Si ist,
R⁴¹ H ist oder zusammen mit R⁴² einen C₃-₈-Carbozyklus definiert,
R⁴² Halogen, CF₃, oder C₁₋₆-Alkyl ist oder zusammen mit R⁴³ einen C₃-₈-Carbozyklus oder zusammen mit R⁴¹ einen C₃-₈-Carbozyklus definiert,
R⁴³ H, Halogen, OH, C₁₋₆-Alkyl ist oder zusammen mit R⁴² einen C₃-₈-Carbozyklus definiert,
R⁴⁴ ein Heterocyclus, -(CR⁴⁵R⁴⁶)₂NH₂ oder -(CR⁴⁵R⁴⁶)NH₂ ist, wobei R⁴⁵ und R⁴⁶ unabhängig voneinander H, C₁₋₆-Akyl, -CH₂F, -CHF₂, CF₃ oder -CH₂OH sind;
v) einer Verbindung der folgenden Formel: 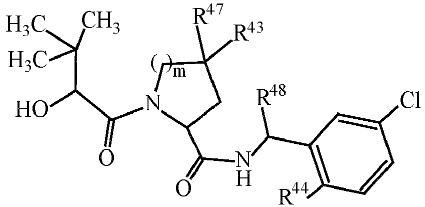 wobei m 0 oder 1 ist,
R⁴³ H, Halogen, OH, C₁₋₆-Alkyl ist oder zusammen mit R⁴⁷ einen C₃-₈-Carbozyklus definiert,
R⁴⁴ ein Heterocyclus, -(CR⁴⁵R⁴⁶)₂NH₂ oder -(CR⁴⁵R⁴⁶)NH₂ ist, wobei R⁴⁵ und R⁴⁶ unabhängig voneinander H, C₁₋₆-Alkyl, -CH₂F, -CHF₂, CF₃ oder -CH₂OH sind,
R⁴⁷H, Halogen, CF₃, C₁₋₆-Alkyl ist oder zusammen mit R⁴³ einen C₃₋₈-Carbozyklus definiert, und
R⁴⁸ C₁-₆-Akyl ist; oder
vi) einer Verbindung der folgenden Formel: 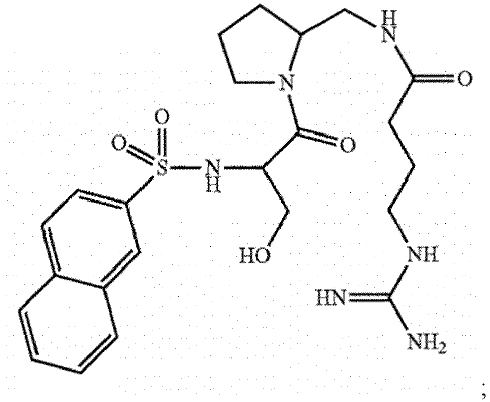 oder wobei der zumindest eine Faktor IIa-Hemmer vorzugsweise ein Thrombinrezeptorantagonist ist, besonders bevorzugt ausgewählt aus der Gruppe bestehend aus:
i) einer Verbindung der folgenden Formel: 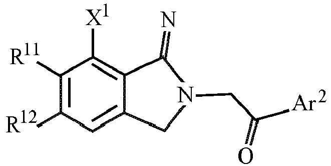 wobei Ar² eine Phenyl- oder eine Morpholinogruppe ist,
X¹ H oder Halogen ist und
R¹¹ und R¹² unabhängig voneinander H, Methoxy oder Ethoxy sind;
ii) einer Verbindung der folgenden Formel: 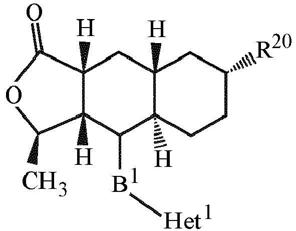 wobei Het¹ eine mono- oder bicyclische heteroaromatische Gruppe von 5 bis 10 Atomen ist, die 1 bis 9 Kohlenstoffatome und 1 bis 4 der Heteroatome N, O oder S enthält und
B¹ (CH₂)ₙ₁, cis oder trans-(CH₂)ₙ₂CR¹⁴=CR¹⁵(CH₂)ₙ₃ oder (CH₂)ₙ₂C≡(CH₂)ₙ₃ ist, wobei n₁ 0 bis 5 und n₂ und n₃ unabhängig voneinander 0 bis 2 sind, R¹⁴ und R¹⁵ unabhängig voneinander H, C₁₋₆-Alkyl oder Halogen sind, und R²⁰ H, C₁₋₆-Alkyl, C₃₋₈-Cycloalkyl, - NHC(O)OR²¹, oder -NHC(O)R²¹ ist, wobei R²¹ H, C₁₋₆-Alkyl, C₁₋₆-Alkyl-OH, oder C₁₋₆-Alkoxy ist;
iii) einer Verbindung der folgenden Formel: 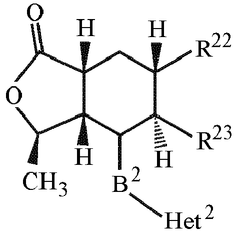 wobei Het² eine mono- oder bicyclische heteroaromatische Gruppe von 5 bis 14 Atomen ist, die 1 bis 13 Kohlenstoffatome und 1 bis 4 Heteroatome enthält,
B² (CH₂)ₙ₁, -CH₂-O-, -CH₂-S-, -CH₂-NR¹³-, -C(O)NR¹³-, -NR¹³C(O)-, 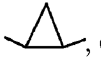 cis oder trans-(CH₂)ₙ₂CR¹⁴=CR¹⁵(CH₂)ₙ₃ oder (CH₂)ₙ₂C≡C(CH₂) ₙ₃ ist, wobei n₁ 0 bis 5 ist und n₂ und n₃ unabhängig voneinander 0 bis 2 sind, wobei R¹³ H, C₁₋₆-Alkyl, Phenyl, C₃₋₇-Cycloalkyl, (C₃₋₇-Cycloalkyl)-(C₁₋₆-Alkyl), (C₁₋₆-Alkoxy)-(C₁₋₆-Alkyl), (C₁₋₆-Alkyl)-OH oder -(C₁₋₆-Alkyl)-Amino ist, und R¹⁴ und R¹⁵ unabhängig voneinander H, C₁₋₆-Alkyl oder Halogen sind,
R²² und R²³ unabhängig voneinander H, R¹⁶(C₁₋₁₀-Alkyl), R¹⁶(C₂₋₁₀-Alkenyl), R¹⁶(C₂₋₁₀-Alkinyl), R¹⁶(C₁₋₁₀-Alkyl), Heterocycloalkyl, R¹⁷-Aryl, R¹⁷-Aryl)-(C₁-C₈-Alkyl), -OH, - OC(O)-R¹⁸, CO(O)R¹⁹, -C(O)-R¹⁸, -C(O)N-R¹⁸R¹⁹ oder -N-R¹⁸R¹⁹ sind, wobei R¹⁶ und R¹⁷ unabhängig voneinander H, ein Halogen oder -OH sind, und R¹⁸ und R¹⁹ unabhängig voneinander H oder C₁₋₁₀-Alkyl sind; oder
iv) einer Verbindung der folgenden Formel: 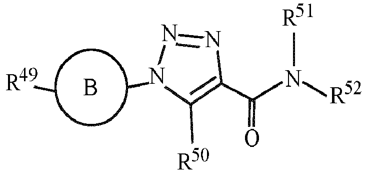 wobei B ein monocyclischer aromatischer Ring ist,
R⁴⁹ -NHCOR⁵³, -NHSO₂R⁵⁴, -NHCON(R⁵⁵)(R⁵⁶), -NHCOOR⁵⁷ oder -CONHR⁵⁸ ist, wobei R⁵³ bis R⁵⁸ unabhängig voneinander H, eine Kohlenwasserstoffgruppe, eine heterocyclische Gruppe oder eine Alkoxygruppe sind und
R⁵⁰ bis R⁵² unabhängig voneinander H, eine Kohlenwasserstoffgruppe, eine heterocyclische Gruppe oder eine Alkoxygruppe sind.

5. Zusammensetzung nach einem der Ansprüche 1 bis 4, **dadurch gekennzeichnet, dass** die Zusammensetzung als Gerinnungsfaktorhemmer zumindest einen Faktor Xa-Hemmer und zumindest einen Faktor IIa-Hemmer aufweist.

6. Zusammensetzung nach einem der Ansprüche 1 bis 5, **dadurch gekennzeichnet, dass** die Zusammensetzung zusätzlich aufweist:
c) zumindest einen Thrombozytenaggregationshemmer.

7. Zusammensetzung nach Anspruch 6, **dadurch gekennzeichnet, dass** der zumindest eine Thrombozytenaggregationshemmer ausgewählt ist aus der Gruppe bestehend aus Cyclooxygenasehemmern, P2Y12-Rezeptorantagonisten, Phosphodiesterasehemmern und Glycoprotein-GPIIb/IIIa-Rezeptorantagonisten.

8. Zusammensetzung nach einem der Ansprüche 6 oder 7, **dadurch gekennzeichnet, dass** der zumindest eine Thrombozytenaggregationshemmer ein Cyclooxygenasehemmer ist, ausgewählt aus der Gruppe bestehend aus:
i) einer Verbindung der folgenden Formel: 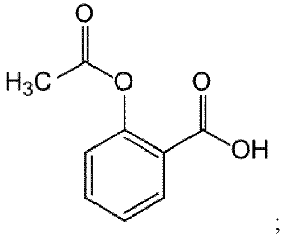 oder der zumindest eine Thrombozytenaggregationshemmer ein P2Y12-Rezeptorantagonist ist, ausgewählt aus der Gruppe bestehend aus:
i) einer Verbindung der folgenden Formel: 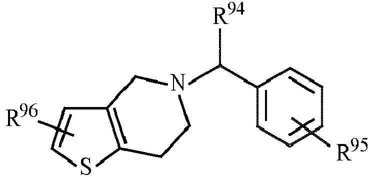 wobei R⁹⁴ H, Halogen, Hydroxy oder C₁₋₆-Alkyl ist,
R⁹⁵ H, Halogen, Hydroxy, Nitro, C₁₋₆-Alkyl oder C₁₋₆-Alkoxy ist und R⁹⁶ H oder Halogen ist;
ii) einer Verbindung der folgenden Formel: 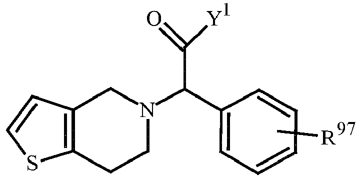 wobei Y¹ -OR⁹⁸ oder -N(R⁹⁹)R¹⁰⁰ ist, wobei R⁹⁹ und R¹⁰⁰ unabhängig voneinander H, Halogen oder eine C₁₋₄-Alkylgruppe sind und R⁹⁸ H oder C₁₋₄-Alkyl ist und
R⁹⁷ H, Halogen oder eine C₁₋₄-Alkylgruppe ist;
iii) einer Verbindung der folgenden Formel: 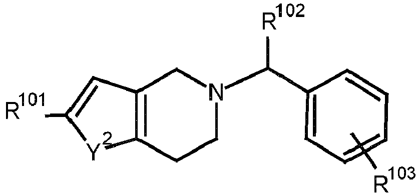 wobei R¹⁰¹ H, OH, Amino, C₁- bis C₄-Alkoxy, Ar-C₁₋₄-alkyloxy, C₁₋₁₈-Alkanoyloxy, C₃₋₆-Alkenoyloxy oder Arylcarbonyloxy ist,
R¹⁰² C₁₋₁₀-Alkanoyl, C₃₋₆-Alkenoyl, C₄₋₈-Cycloalkylcarbonyl mit 3 bis 7 Ringatomen, substituiertes Benzoyl und 5,6-Dihydro-1,4,2-dioxazin-3-yl ist,
Y² NH, O oder S ist und
R¹⁰³ H, Halogen, OH, Amino, C₁₋₄-Alkyl, C₁₋₄-Alkoxy, C₁₋₄-Alkylthio oder eine Carboxy-Gruppe ist;
iv) einer Verbindung der folgenden Formel: 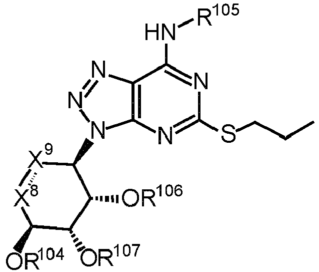 wobei R¹⁰⁴ H, Halogen, Hydroxy-C₁₋₈-Alkyl, C₁₋₈-Alkoxy-C₁₋₈-Alkyl oder Carboxy-C₁₋₈-Alkyl ist,
R¹⁰⁵ C₁₋₈-Alkyl, C₁₋₈-Alkoxy-C₁₋₈-Alkylthio-C₁₋₈-Alkyl, C₃₋₈-Cycloalkyl-C₁₋₈-Alkyl, Phenyl-C₁₋₈-Alkyl, Heterocyclyl, Heterocyclyl-C₁₋₈-Alkyl, Heteroaryl-Ci-s-Alkyl oder Halo-C₁₋₈-Alkyl ist,
R¹⁰⁶ und R¹⁰⁷ unabhängig voneinander H sind oder zusammen mit den Kohlenstoffatomen, an die sie gebunden sind, einen 5- oder 6-gliedrigen Heterocyclus definieren und
X⁸ und X⁹ unabhängig voneinander CH, CH₂ oder CH(OH) sind und
-̅-̅-̅-̅-̅ eine Einfachbindung oder eine Doppelbindung ist;
v) einer Verbindung der folgenden Formel: 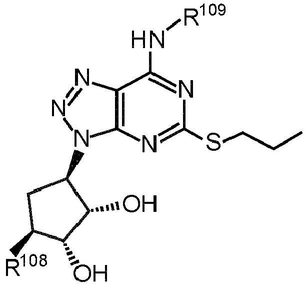 wobei R¹⁰⁸ Heterocyclyl, Heterocyclyl-C₁₋₈-Alkyl, Heteroaryl, Heteroaryl-C₁₋₈-Alkyl oder Halo-C₁₋₈-Alkyl ist und
R¹⁰⁹ C₁₋₈-Alkyl, C₁₋₈-Alkoxy-C₁₋₈-Alkylthio-C₁₋₈-Alkyl, C₃₋₈-Cycloalkyl, C₃₋₈-Cycloalkyl-C₁₋₈-Alkyl, Phenyl-C₁₋₈-Alkyl, Heterocyclyl-C₁₋₈-Alkyl, Heteroaryl-C₁₋₈-Alkyl oder Halo-C₁₋₈-Alkyl ist;
vi) einer Verbindung der folgenden Formel: 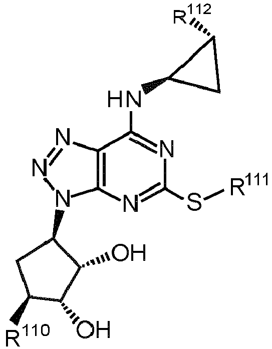 wobei R¹¹⁰ OH, CH₂OH oder OCH₂CH₂OH ist,
R¹¹¹ C₃₋₅-Alkyl ist,
R¹¹² Phenyl, inklusive mit einem oder mehreren F substituiertes Phenyl, ist;
vii) einer Verbindung der folgenden Formel: 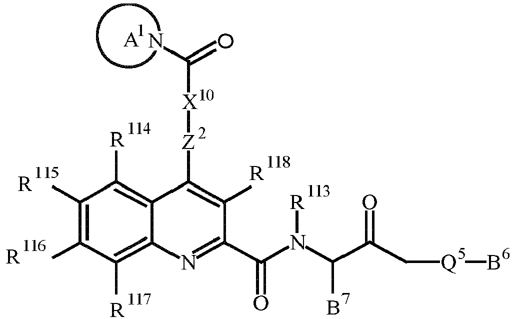 wobei R¹¹³ H oder C₁₋₄-Alkyl ist,
R¹¹⁴ bis R¹¹⁸ unabhängig voneinander H, C₁₋₆-Alkyl, C₁-₃-Fluoroalkyl, Halogen, CN oder Phenyl sind,
X¹⁰ C₃₋₈-Alkylenyl, C₁₋₃-Cycloalkylenyl oder C₃₋₁₅-Heterocyclyl ist,
Z² Alkylenyl, Alkenyl oder Alkinyl ist,
A¹ ein 3- bis 10-gliedriger heterocyclischer mono-, bicyclischer oder spiroheterocyclischer Ring ist, der 0, 1, 2 oder 3 zusätzliche Heteroatome von N, S oder O enthält,
Q⁵ ein mono- oder bicyclischer 3- bis 15-gliedriger Heterocyclus ist und
B⁶ und B⁷ unabhängig voneinander H, C₁₋₄-Alkyl, C₃₋₈-Cycloalkyl, C₆₋₁₄-Aryl, ein 3- bis 7-gliedriger Heterocyclus, -C(O)OH, -CNH₂, -C(O)NH-(C₁₋₆-Alkyl), -C(O)O-(C₁₋₆-Alkyl) oder -C(O)N(R)-R sind;
viii) einer Verbindung der folgenden Formel: 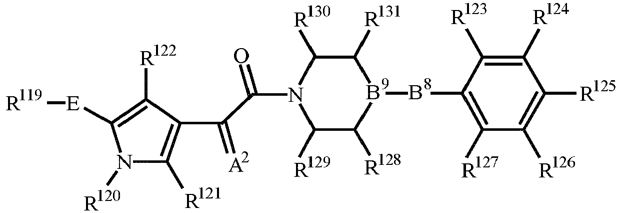 wobei A² O oder N-OH ist,
B⁸ eine kovalente Bindung, -C(O)- oder Methylenyl ist,
B⁹ N oder CH ist,
E eine kovalente Bindung, -O-C(O)- oder -NH-C(O)- ist,
R¹¹⁹ H, C₁₋₈-Alkyl-, C₀₋₄-Alkylen-(C₃₋₈-Cycloalkyl), C₀₋₄-Alkylen-(C₆₋₄-Aryl) oder C₀₋₄-Alkylen-Heterozyklyl ist,
R¹²⁰ H, -NH-C(O)- oder -O-C(O)- ist,
R¹²¹ C₁₋₈-Alkyl-, CF₃, oder (C₁₋₈-Alkylen-)-C(O)-O-R¹³² und R¹²² H, Halogen, C₁- bis C₈-Alkyl-, (C₁₋₈-Alkylen-)-C(O)-O-R¹³², (C₂₋₆-Alkenylen-)-C(O)-O-R¹³² oder C₃₋₇-Cycloalkyl)-C(O)-O-R¹³² sind, wobei R¹³² H, C₁- bis Cs-Alkyl- oder C₀₋₄-Alkylen-(C₃₋₈-Cycloalkyl) ist,
R¹²³ bis R¹²⁷ unabhängig voneinander H, Halogen, CN, NO₂, C₁₋₈-Alkyl-, C₀₋₄-Alkylen-O-R¹³², (C₀₋₄-Alkylen-)-C(O)-O-R¹³², (C₀₋₄-Alkylen-)-C(O)-R¹³², (C₀₋₄-Alkylen-)-C(O)-N-R¹³²R¹³³ oder (C₀₋₄-Alkylen)-CN-R¹³²R¹³³ sind, wobei R¹³³ H oder C₁- bis C₈-Alkyl- ist und
R¹²⁸ bis R¹³¹ unabhängig voneinander H, =O, -OH oder C₁- bis C₈-Alkyl- sind; oder
ix) einer Verbindung der folgenden Formel: 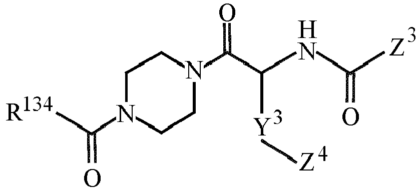 wobei Z³ ein substituierter -2-Thiazolring oder -4-Thiazolring ist, wobei ein -2-Thiazolring an Position 4 mit H, einer Arylgruppe und/oder an Position 5 mit H, Halogen, C₁- bis C₄-Alkyl-, C₂- bis C₄-Alkenyl-, Phenyl oder di-C₁₋₆-Alkylaminio substituiert ist und ein -4-Thiazolring an Position 2 mit H oder einer Arylgruppe und/oder an Position 5 mit H, Halogen, COOH, C₁- bis C₄-Alkyl-, COO(C₁₋₄-Alkyl-), C₂₋₄-Alkenyl-, Phenyl, C₁-₄-Alkylamino, di-C₁-₄-Alkylamino, Heterocyclyl oder 2-Methoxymethyl-cycloprop-1-yl substituiert ist,
Y³-Z⁴ entweder eine Bindung und H repräsentieren, oder Y³ C₁- bis C₃-Alkandiyl ist und Z⁴ H, OH, Phenyl, -COOH, -COO(C₁₋₄-Alkyl), -P(O)(OH)₂, -P(O)(O-[C₁₋₄-Alkyl])2, - P(O)(O-[C₁-₄-Alkoxy]-C(O)O-CH₂)₂ oder -P(O)(NH[C₁-₄-Alkoxy]-C(O)-[C₁-₄-Alkyl])₂ ist und
R¹³⁴ C₁- bis C₆-Alkoxy ist;
oder der zumindest eine Thrombozytenaggregationshemmer ein Glycoprotein-GPIIb/IIIa-Rezeptorantagonist ist, ausgewählt aus der Gruppe bestehend aus:
i) einer Verbindung der folgenden Formel: 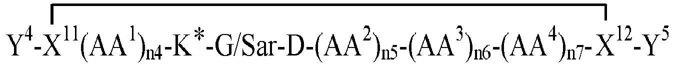 wobei Y⁴ und Y⁵ unabhängig voneinander ein nicht-interferierender Substituent oder abwesend sind,
K* ein substituierter oder unsubstituierter Lysylrest der Formel R¹³⁵R¹³⁶₂N(CH₂)₄CHNHCO ist, wobei R¹³⁵ und R¹³⁶ unabhängig voneinander H oder C₁- bis C₆-Alkyl sind,
X¹¹ und X¹² unabhängig voneinander ein beliebiger Rest sind, der die gezeigte Ringbildung zwischen X¹¹ und X¹² ermöglicht,
(AA¹) eine kleine neutrale Aminosäure ist und n₄ eine Zahl von 0 bis 3 ist,
(AA²) eine große unpolare Aminosäure und n₅ ist eine Zahl von 0 bis 3 ist,
(AA³) ein Prolinrest oder ein modifizierter Prolinrest ist und n₆ 0 oder 1 ist und (AA⁴) eine kleine, neutrale Aminosäure oder eine N-alkylierte Form davon und n₇ eine Zahl von 0 bis 3 ist;
ii) einer Verbindung der folgenden Formel: 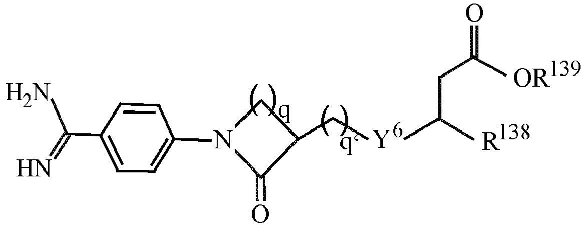 wobei 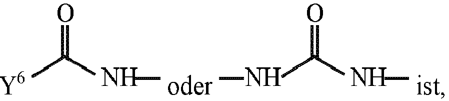 q 2 oder 3 ist,
q' eine ganze Zahl von 0 bis 4 ist,
R¹³⁸ H, C₁- bis C₆-Alkyl-, C₁- bis C₈-Alkoxy-, C₁- bis C₈-Alkoxycarbonyl-, C₂- bis C₆-Alkenyl, C₂- bis C₆-Alkinyl, Cycloalkyl oder Aryl ist,
R¹³⁹ C₁- bis C₆-Alkyl-, C₂- bis C₆-Alkenyl, C₂- bis C₆-Alkinyl, Alkoxycarbonyloxyalkyl, und
C₃- bis C₆-Cycloalkyl oder Aryl ist;
iii) einer Verbindung der folgenden Formel: 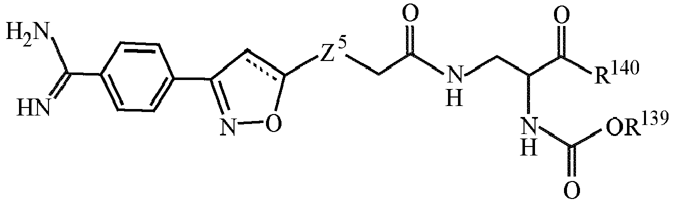 wobei Z⁵ eine kovalente Einfachbindung, C₁- bis C₇-Alkyl-, C₂- bis C₇-Alkenyl oder C₂- bis C₇-Alkinyl ist,
R¹³⁹ C₁- bis C₆-Alkyl-, C₂- bis C₆-Alkenyl, C₂- bis C₆-Alkinyl, Alkoxycarbonyloxyalkyl, C₃- bis C₆-Cycloalkyl oder Aryl ist,
R¹⁴⁰ Hydroxy, C₁- bis C₁₀-Alkoxy-, C₃- bis C₁₀-Alkylcarbonyloxyalkyloxy- oder C₇- bis C₁₁-Aralkyloxy- ist und
-̅-̅-̅-̅-̅ eine Einfachbindung oder eine Doppelbindung ist;
iv) einer Verbindung der folgenden Formel: 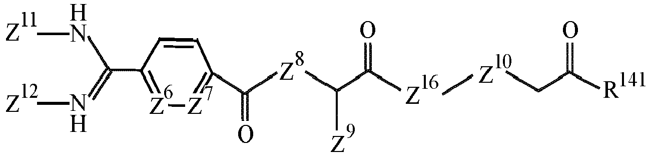 wobei eins von Z⁶ und Z⁷ CH und das andere CH, C₁- bis C₈-Alkyl-, C₁- bis C₈-Alkoxy oder N ist,
Z⁸ NH, C₁- bis C₈-Alkyl-N oder C₁- bis C₈-Alkoxy-(C₁- bis C₈-Alkyl-)N ist,
Z⁹ H oder ggf. durch OH, SH, CONH₂, CONH- C₁- bis C₈-Alkyl, C₁- bis C₈-Alkylthio, Aryl, NH₂, NH-(C₁- bis C₈-Alkyl-), N(C₁- bis C₈-Alkyl-)( C₁- bis C₈-Alkyl-) oder O-(C₁- bis C₈-Alkyl-) subsituiertes C₁- bis C₈-Alkyl ist,
Z¹⁰ O, CH₂, NH, Acyl-N oder C₁- bis C₈-Alkyl-OC(O)N ist,
Z¹¹ und Z¹² H, C₁- bis C₈-Alkyl, OH, C₁- bis C₈- Alkoxy, C₁- bis C₈-Alkoxy- C₁- bis C₈-alkyl, Carboxy- C₁- bis C₈-alkyl, P(O)(O-C₁- bis C₈-Alkyl)₂, C(O)O-C₁- bis C₈-Alkyl, OC(O)-C₁- bis C₈-Alkyl, OC(O)O-C₁- bis C₈-Alkyl oder C(O)S-C₁- bis C₈-Alkyl sind, wobei zumindest eins von Z¹¹ und Z¹² H ist oder Z¹¹ und Z¹² zusammen mit den N-Atomen, an die sie gebunden sind, eine (5,5-Dimethyl- oder 5-Oxo)-4,5-dihydro-1,2,4-oxadiazol-3-ylgruppe sind,
Z¹⁶ ein über das N-Atom an die Ketogruppe gebundenes 1,4-Piperidinylen oder optional durch C₁- bis C₈-Alkyl, C₁- bis C₈-Alkoxy, OCH₂COOH oder OCH₂COO-(C₁- bis C₈-Alkyl) substituiertes 1,4-Phenylen ist, und
R¹⁴¹ NH₂, NH(-C₁- bis C₈-Alkyl), NH-(C₁- bis C₈-Alkyl-)COOH, NH-(C₁- bis C₈-Alkyl)-COO-(C₁- bis C₈-Alkyl), C₁- bis Cs-Alkyloxy oder C₁- bis Cs-Alkenyloxy ist;
v) einer Verbindung der folgenden Formel: 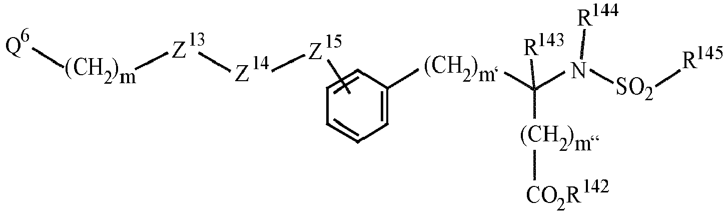 wobei Q⁶ ein vier- bis achtgliedriger heterozyklischer Ring ist, der 1, 2, 3 oder 4 Heteroatome aufweist, die N, O oder S sind,
m eine ganze Zahl von 0 bis 8 ist,
m' und m" unabhängig voneinander eine ganze Zahl von 0 bis 2 sind, Z¹³ und Z¹⁴ unabhängig voneinander Phenyl, O, SO₂, 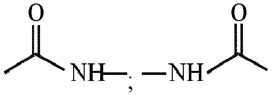 oder ein 5- oder 6-gliedriger Ring sind, der 0 oder 1 Heteroatome aus N oder O enthält,
Z¹⁵ eine optionale vorhandene Gruppe ist, die O, -NHCO-, -CONH- oder C₁- bis C₅-Alkyl-OC(O)N ist,
R¹⁴² H oder C₁- bis Cs-Alkyl ist,
R¹⁴³ und R¹⁴⁴ unabhängig voneinander H, C₁- bis C₄-Alkyl oder C₄- bis C₁₀-Aralkyl sind, und
R¹⁴⁵ Aryl, C₁- bis C₁₀-Alkyl oder -Cycloalkyl oder C₄- bis C₁₀-Aralkyl ist; oder
vi) einer Verbindung der folgenden Formel: 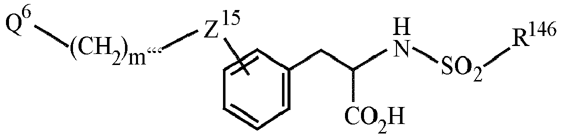 wobei Q⁶ ein sechsgliedriger heterozyklischer Ring ist, der 1 oder 2 Heteroatome aufweist, die N sind,
m'" eine ganze Zahl von 2 bis 6 ist,
Z¹⁵ 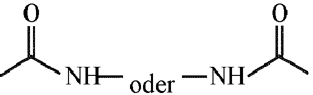 ist und
R¹⁴⁶ Aryl, C₁- bis C₁₀-Alkyl oder C₄- bis C₁₀-Aralkyl ist.

9. Zusammensetzung nach einem der Ansprüche 6 bis 8, **dadurch gekennzeichnet, dass** die Zusammensetzung zumindest zwei Thrombozytenaggregationshemmer aufweist, wobei vorzugsweise zumindest ein Thrombozytenaggregationshemmer ein Cyclooxygenasehemmer ist und zumindest ein Thrombozytenaggregationshemmer ein P2Y12-Rezeptorantagonist oder ein Glycoprotein-GPIIb/IIIa-Rezeptorantagonist ist.

10. Zusammensetzung nach einem der Ansprüche 1 bis 9, **dadurch gekennzeichnet, dass** der zumindest eine p-GP-Inhibitor ausgewählt ist aus der Gruppe bestehend aus:
i) einer Verbindung der folgenden Formeln: 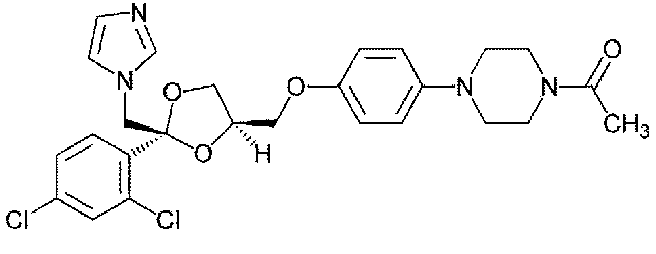 oder 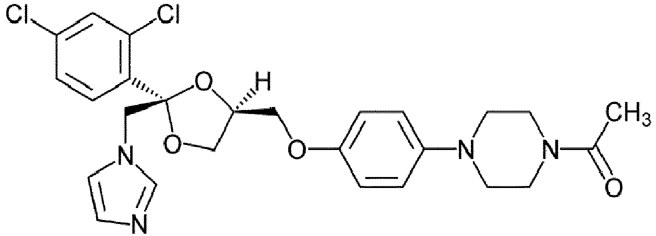 oder einer Mischung davon, insbesondere einem Racemat davon;
ii) einer Verbindung der folgenden Formel: 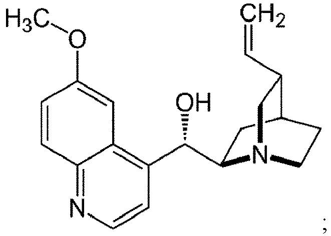
iii) einer Verbindung der folgenden Formel: 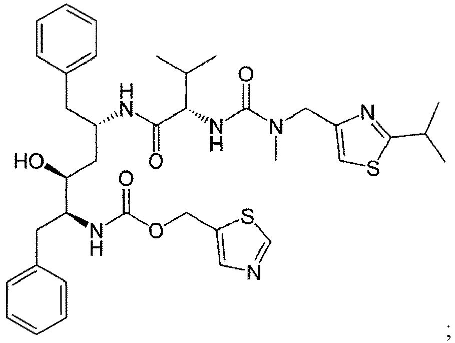
iv) einer Verbindung der folgenden Formeln: 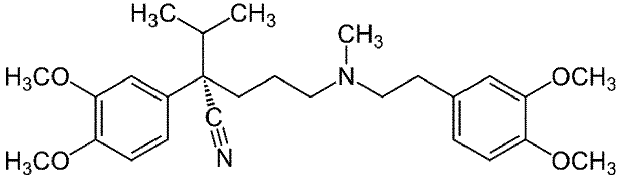 oder 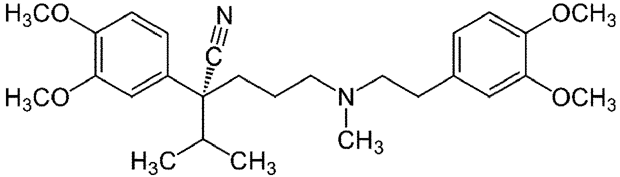 oder einer Mischung davon, insbesondere einem Racemat davon;
v) einer Verbindung der folgenden Formel: 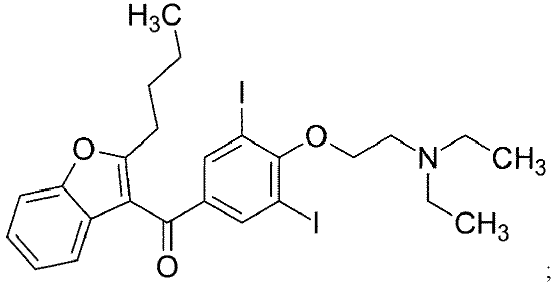
vi) einer Verbindung der folgenden Formel: 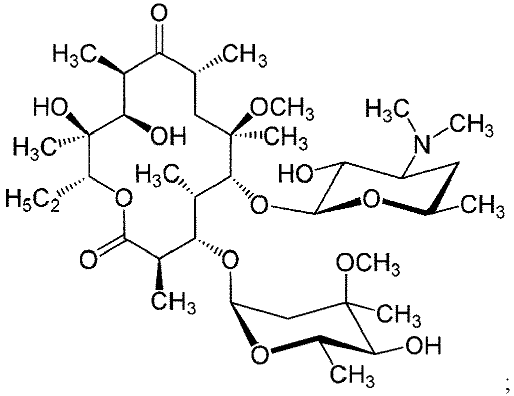
vii) einer Verbindung der folgenden Formel: 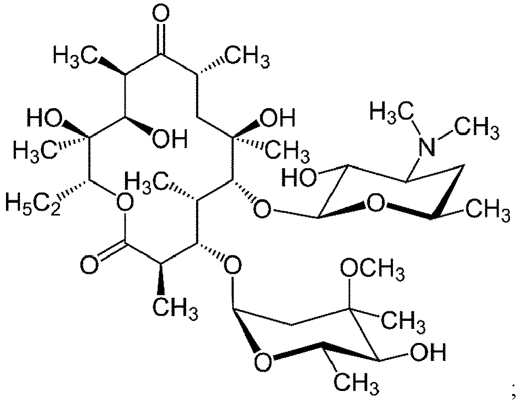
viii) einer Verbindung der folgenden Formeln: 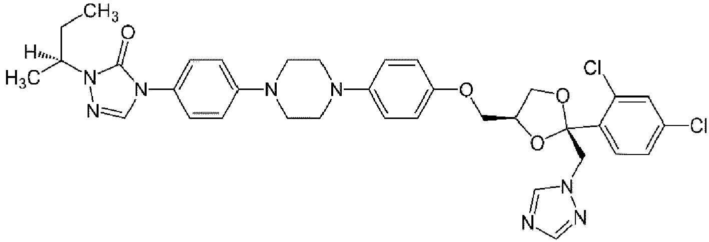 oder 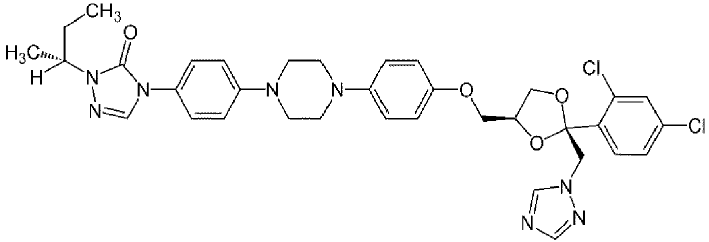 oder einer Mischung davon, insbesondere einem Racemat davon; oder
ix) einer Verbindung der folgenden Formel:

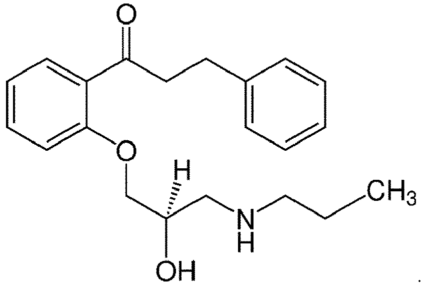

11. Verwendung einer Zusammensetzung nach einem der Ansprüche 1 bis 10 als Rodentizid.

12. Schadnagetierköder, enthaltend eine Zusammensetzung nach einem der Ansprüche 1 bis 10.

13. Schadnagetierköder nach Anspruch 12, **dadurch gekennzeichnet, dass** die einzelnen Komponenten der Zusammensetzung nach einem der Ansprüche 1 bis 10 jeweils in einer Konzentration in einem Bereich von größer 0 ppm bis kleiner oder gleich 100 ppm bezogen auf das Gesamtgewicht des Schadnagetierköders enthalten sind.

14. Verfahren zur Bekämpfung von Schadnagetieren, wobei ein Schadnagetierköder nach Anspruch 13 ausgebracht wird.
